# EUROPEAN PATENT SPECIFICATION

(11) **EP 3 241 362 B1**
(45) Date of publication and mention of the grant of the patent: **22.04.2020**
(21) Application number: 15823097.9
(22) Date of filing: 18.12.2015
(51) Int. Cl.: H04W 4/18, H04W 4/20, H04W 4/80, H04W 8/18, H04W 48/18, H04W 52/02, H04W 88/04, H04W 88/18

(54) **CLOUD SUPPORT FOR DISCOVERY AND DATA TRANSFER FOR MOBILE CLIENT DEVICES**
CLOUD-UNTERSTÜTZUNG FÜR ENTDECKUNG UND DATENÜBERTRAGUNG FÜR MOBILE CLIENT-VORRICHTUNGEN
ASSISTANCE EN NUAGE À LA DÉCOUVERTE ET AU TRANSFERT DE DONNÉES POUR DES DISPOSITIFS CLIENTS MOBILES

(30) Priority: 06.03.2015 US 201562129643 P; 23.10.2015 US 201514921511
(43) Date of publication of application: 08.11.2017
(73) Proprietor: Apple Inc., Cupertino CA 95014 (US)
(72) Inventor: FLYNN, Paul V., Cupertino, California 95014 (US); SINGH, Ajoy K., Cupertino, California 95014 (US); ZHAO, Wen, Cupertino, California 95014 (US); MATHEWS, Dennis, Cupertino, California 95014 (US); MUJTABA, Syed Aon, Cupertino, California 95014 (US); HARIHARAN, Sriram, Cupertino, California 95014 (US); SEMERSKY, Matthew L., Cupertino, California 95014 (US)
(74) Representative: Barnfather, Karl Jon
(86) International application number: PCT/US2015/066622
(87) International publication number: WO 2016/144405

(56) References cited:
- WO-A1-2014/120173
- US-A1- 2009 221 261
- US-A1- 2012 173 901

## Description

### CROSS-REFERENCES TO RELATED APPLICATIONS

The present application claims priority from US Non-Provisional Application No.; 14/921,511 (Attorney Docket No.: 090911-P25331US1-0941834), entitled "Cloud Support For Discovery And Data Transfer For Mobile Client Devices" filed October 23, 2015, which claims the priority of U.S. Provisional Application No.: 62/129,643 (Attorney Docket No.: 90911-P25331USP1-924752), entitled "Cloud Support For Discovery And Data Transfer For 10 Mobile Client Devices" filed March 6, 2015.

This application is related to die following commonly owned U.S. Patent Applications; U.S. Provisional Patent Application No.: 62/056,297 (Attorney Docket No.: 90911-P21146USP1-912512), filed September 26, 2014, entitled "Network Bandwidth
Sharing For Mobile Devices;" U. S, Provisional Patent Application No.: 62/129,476 (Attorney Docket No.: 90911-P25327USP1-924749), filed March 6, 2015, entitled "Determining When To Establish Connection Between Mobile Client And Proxy Devices;" and U.S. Provisional Patent Application No.; 62/129,492 (Attorney Docket No.: 90911-P25329USP1-924750), filed March 6, 2015, entitled "Determining Routing Of Proxy Traffic Between Mobile Client
And Proxy Devices,"

### FIELD

Embodiments relate generally to managing proxy network connections between devices.

### BACKGROUND

With the ever expanding number of different types of networked devices, users may now simultaneously utilize several computing devices including a desktop computer, a laptop computer, a mobile phone, a tablet, networked wearable devices, networked home appliances, and other networked devices. Smaller mobile devices in particular may not have the power or hardware resources for network connectivity to much of the existing wireless network infrastructure. Additionally, by their very nature, wearable devices are often moving while being worn by users that are active, Managing communications in such an environment is an increasingly complex task. Examples of prior art include US2009/221261, US2012/173901, and WO 2014/120173.

### SUMMARY

Systems, methods, and computer-readable medium for optimizing data transfer between a wide area network and a mobile client device through a proxy device are provided as set out in the appended independent claims. In some embodiments, the mobile client device may have limited wireless network capabilities, such as a smart watch or the like, while the proxy device may have wide area network (e.g., the Internet) access. In some embodiments, the proxy device can determine whether data is available at a server for the client device, and determine whether to connect
with the client device based on whether data is available. In this manner, unnecessary connections can be avoided.

According to some embodiments, the host device may comprise at least one wireless interface for communications, a memory, and a processor coupled to the memory and to the wireless interface. The host device may receive, from the client device, an advertisement message that includes a unique identifier associated with the client device and a request for communication of data from a cloud-based service. Responsive to receiving the advertisement message, the host device may then send the unique identifier to the cloud- based service. The host device may receive, from the cloud-based service, a proxy indication of available data associated with the client device.

In response to receiving the proxy indication of available data, the host device may provide, via the wireless interface, a connection request including a client indication of the available data from the cloud-based service to the client device. After receiving a response to the connection request, the host device may establish a connection with the client device, and send, via the wireless interface, the available data to the client device.

According to other embodiments, a client device may be able to achieve Internet access via connecting to a host device with Internet access. The client device may identify a connection type needed by the client device in response to receipt of a trigger signal indicating that an attempt to connect to the host device is to be performed. For example, the client device may identify that a downlink connection is needed to check for download
available data from a cloud-based service. The available data may include messages, email alerts, and other data queued for delivery to the client device. The available data may be queued at the cloud-based service and associated with the client device. The client device
may also generate an advertisement message for requesting connection to the host device. The advertisement message may be provided to the host device with a request for a wireless connection with the host device. The advertisement message may include an indication of a requested connection type and a unique identifier associated with the client device. The client device may receive a connection request from the host device that indicates that there is data available from the Internet that can be transferred to the client device.

Other embodiments are directed to systems, portable consumer devices, and computer readable media associated with methods described herein.

A better understanding of the nature and advantages of embodiments of the present disclosure may be gained with reference to the following detailed description and the accompanying drawings.

### BRIEF DESCRIPTION OF THE DRAWINGS

FIG. 1 is an example block diagram of a system showing communication between a primary data source, host device, and client devices.
FIG. 2 is an example block diagram illustrating host devices and client devices at various locations.
FIGs. 3 and 4 are example block diagrams showing embodiments of communications to transfer data between a cloud-based service and a client device via a host device.
FIG. 5 is a flowchart of an example method of using a proxy device to establish a proxy connection for communicating data between a cloud-based service and a client device.
FIG. 6 is a flowchart of an example method of using a client device to indicate a unique identifier and a requested connection type within an advertisement message requesting a connection to a network.
FIG. 7 is an example block diagram showing embodiments of the communication between a host device and a client device
FIG. 8 is an example block diagram showing additional features of a client device.
FIG. 9 is an example block diagram showing additional features of a proxy device.
FIG. 10 is an example block diagram showing additional embodiments of a client device and a proxy device, and network connections between the devices.
FIG. 11 is an example block diagram showing a device that may be a host device, a client device, or a server.

### DETAILED DESCRIPTION

Embodiments described herein relate to the use of a host device (e.g., a smartphone) to provide wide area network (WAN) service (e.g., cellular data service) to an electronic device, such as a smart watch and a music player, with limited or no WAN connectivity. The connectivity process can include determinations of whether there is data to be transferred from the WAN to the small electronic device (e.g., downlink data), how to provide the data, and communications to be used by the host device to create a connection. Such determinations can reduce power consumption by the host device and reduce frustration of a user.

Certain types of electronic devices often do not have cellular data service, or other WAN service, that operates effectively or seamlessly as a user moves from location to location. In many cases, this is due to size and/or power restrictions on such devices. The antennas for such services are larger than the antennas for local area network (LAN) or near field connections provided by WiFi, Bluetooth™ (BT), or other such short-range communication systems. The additional costs and size of WAN network chipsets and WAN service providers also can discourage inclusion of this functionality in some electronic devices. Rather than integrating such functionality with certain types of electronic devices, e.g., small devices, embodiments can use LAN functionality of a connectivity-limited electronic device to enable communication via a host device with WAN access.

Host devices that include WAN functionality and client devices that include LAN functionality may both be configured to identify a type of a network connection (e.g., uplink or downlink) requested and a unique client identifier (client ID) of a client device requesting the network connection. For example, a client device may be configured to include its unique client ID in a connection advertisement (also referred to as an "advertisement message" or "connection request") sent to a host device. The connection advertisement may indicate that the client is checking for data that may be available from a WAN (e.g., downlink data). In response to receiving such a connection advertisement, a host device may send a query or request for downlink data to the WAN, where the query includes the client ID. The WAN may send a response to the host device indicating that there is data available for the client device. The host device may then send a connection request to the client device and establish a connection with the client device so that the available data can be transferred to the client device. Establishing such a connection when there is available data to download from the WAN can reduce power consumption by the host device by avoiding unnecessary connections and communications between the client device and the host device when there is no pending available data for the client at the WAN.

Some embodiments optimize transferring data from a cloud-based service to a client device by using a host device as a proxy to determine whether there is downlink data available at a WAN. For example, instead of establishing an end-to-end connection between the client device and a WAN via a host, and subsequently checking to see if there is available data queued at the WAN for delivery to the client device, certain embodiments use the host as a proxy to check for available data for the client before completing the connectivity process. In this way, some embodiments avoid inefficiencies involved in establishing an end-to-end connection between a WAN server and a client device in response to receiving an advertisement message from the client only to find out that there is no available data for the client at the server. Example embodiments may use a unique client identifier included in a client device's advertisement message to query a WAN server and determine if there is available data to be transferred from the server to the client before establishing a data connection for transferring the available data to the client.

Accordingly, a data connection between the client and the WAN via the host may be established by the host device based on determining that there is available data at the WAN to be transferred to the client.

### I. DEVICES FOR UTILIZING A PROXY

A client device refers devices that receive the benefit of network bandwidth shared by a host device. Examples of such devices include smart watches, music players such as iPod™ devices, LAN-only health monitors, and other such devices with LAN functionality.

A host device, a proxy device, or a data provider all refer to any device with both WAN and LAN functionality that may be configured to provide network access to a client device that may not be associated with a user of the host device. Smartphones are one example of such a host device. Mobile access points (AP) with WAN and LAN functionality, laptop computers, or other such devices may also function as host devices.

In some examples, a user may utilize at least two electronic devices. One of the two electronic devices may be a client device, while the other may be a host device as defined above. For example, the user may utilize a wearable device and a smartphone, or other WAN-accessible device. While the user's smartphone may regularly act as the host device for the client device to access WAN content, there may be instances where the user is only interacting with the client device and/or is out of range of the host device. In such instances, the client device may attempt to access WAN content via one or more other host devices, e.g., of other users. One such example may include while the user is exercising. In this case, the user may choose to interact with the wearable device due to its smaller size, and may opt to leave the host device behind. As such, if the client device can access WAN content through another host device, it may not have to rely on the user's host device. Other examples may include instances where the battery of the user's host device has degraded or has at least lowered to a level where access to the WAN via the user's host device may not be feasible. In these examples where the user of the client device is relying on another user's host device, the user may want to minimize the power consumption resulting from accessing WAN content through the host device. For example, the user of the client device may wish to avoid accessing WAN content through an application processor of the host device so as to reduce battery usage at the host device.

### A. Systems

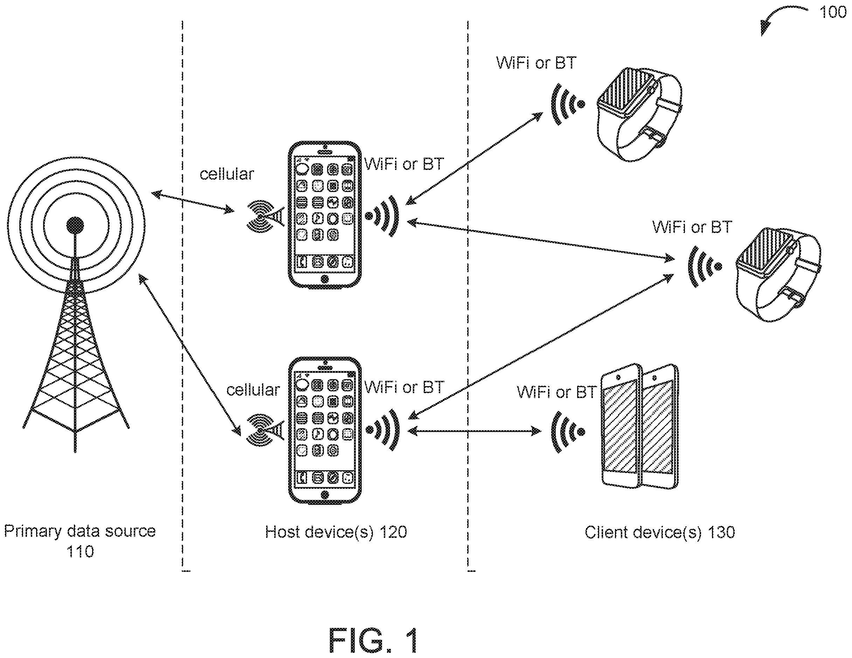

FIG. 1 illustrates a system 100 than can implement proxy network connection management to provide network access to moving client devices without WAN functionality. FIG. 1 includes a primary data source 110, two host devices 120, and three client devices 130. The primary data source 110 may be any data source connected to a WAN such as the Internet. Such primary data sources may include cell phone towers, satellites, high altitude balloons with network functionality, and other such network infrastructure. The primary data source 110 communicates directly with each host device 120 via a WAN connection, such as wireless long-term evolution (LTE) cellular communications.

If a host device 120 is configured to share network resources with client devices 130, then the host device 120 and client device 130 will communicate via a wireless LAN (WLAN) connection such as WiFi or BT. The WLAN connection may be initiated by either the host device 120 or the client device 130 in different embodiments. In certain embodiments, a client device 130 may send an advertisement message to a host device 120 (also called a "proxy device") requesting a WLAN connection, and the host device may establish the WLAN connection based on determining that there is available data pending for the client at the WLAN. In some embodiments, data transfer using the established connection may be initiated by the host in response to receiving available data from the WLAN. For example, the host device may receive the available data from the WLAN as part of a response to a query for available data. In certain embodiments, data transfer using the established connection may be initiated by the host in response to receiving available data from the WLAN and a second connection advertisement from the client device. For example, the host device may receive the available data from the WLAN, and then send the data after receiving a second connection advertisement from the client.

### B. Proximity of Devices

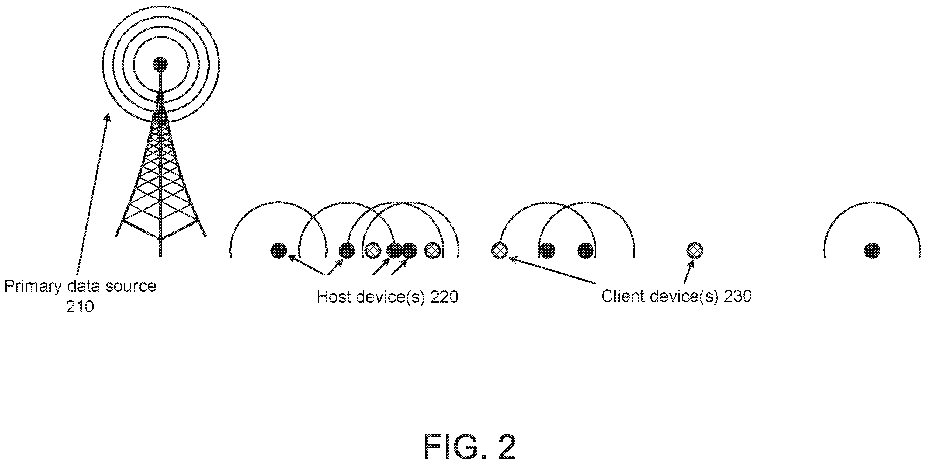

FIG. 2 is an example block diagram illustrating host devices and client devices at various locations. FIG. 2 similarly shows a primary data source 210, with a number of host devices 220, and client devices 230, where the horizontal axis conveys distance. Each host device 220 is shown with service arcs indicating the effective communication distance for WLAN communications. In many environments, the devices will be on flat ground, so the service is essentially offered in a circle around the host device 220, but inside a building or in other environments, data may also be shared by a host device 220 to client devices 230 above or below a sharing host device 220. As illustrated by FIG. 2, with a sufficient number and density of appropriate host devices 220, regular periodic service, near-continuous, or even continuous service may be offered to client devices 230, even when the client devices 230 are moving in and out of range of connected host devices 220. In some cases, the client devices 230 and the host devices 220 may be moving towards each other or away from each other. In some implementations, such devices may not be a good choice for establishing LAN connections, particularly when a more suitable host is available. A host device 220 with WLAN access may be able to connect to a client device 230 with limited wireless networking capabilities to provide the WLAN access to the client device 230. In this way, the host device 220 can act as a proxy device.

### II. COMMUNICATIONS BETWEEN DEVICES

Network connection management can be done without having to explicitly set up another device on a host device. Normally, one would need to allow tethering explicitly on a user interface and specify a particular device to gain network access. In some examples, a user can specify only some general parameters, and not have to allow access on a device-by-device basis. Since acting as a host device may cause battery drain on the proxy device, and may use data from a cellular data plan of a user of the proxy device (which may be different from the user of the client device), each proxy device can decide whether to volunteer to serve as a host. Additionally, once a potential host volunteers, each client device can decide whether to accept the proxy connection. This section describes inter-device communications that may be used to facilitate the network connection management (i.e., these decisions) and optimize data transfer between a network and a client device according to embodiments described herein.

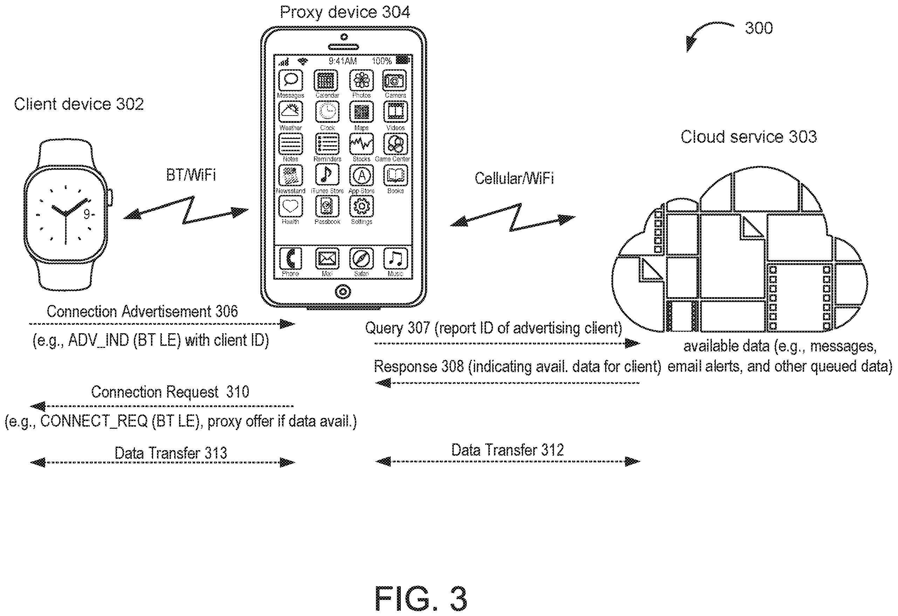

FIG. 3 is a block diagram of communications between devices to transfer data between a cloud-based service and a client device via a host device according to various embodiments. FIG. 3 and other figures are merely illustrative of an embodiment or implementation, or of aspects of an embodiment or implementation disclosed herein, and should not limit the scope of any embodiment as recited in the claims. One of ordinary skill in the art may recognize through this disclosure and the teachings presented herein other variations, modifications, and/or alternatives to those embodiments or implementations illustrated in the figures. FIG. 3 is one example of a system 300 that may use a proxy device to provide data to client devices. The devices in system 300 can include hardware and/or software elements.

### A. Connection Advertisements

FIG. 3 illustrates communications between a client device 302, a proxy device 304, and a cloud service 303 to which proxy device 304 can connect. Although a single client device 302 and proxy device 304 are depicted in FIG. 3, the communications of system 300 can be used in environments with multiple client devices and proxies. A client device 302 may send connection advertisements 306 to periodically check for downlink data queued for the client, via a proxy device 304.

In one aspect, a client device 302 may request a WAN downlink connection from a proxy device 304 by providing a connection advertisement 306. For example, the client device 302 may send connection advertisement 306 with an identifier (ID) associated with the client device 302. The ID (also referred to as a "client ID" or "client identifier") may uniquely identify the client. The ID can be an identifier of the client device 302 (e.g., a unique device identifier (ID) or the like). The connection advertisement 306 may include a request to check for downlink data available at cloud service 303. Client device 302 of a user may be in motion at the time the client device 302 requests a network connection (e.g., while being worn on a user exercising or otherwise moving). As such, the client device 302 may send out connection requests periodically (e.g., periodic connection advertisements 306), as any current connection may be only temporary while client device 302 is within range of a host device to which a connection is made. Especially since proxy devices may also be in motion, connections with proxies may be brief for a client device.

Generally, connection advertisements 306 can be any type of request for a connection and may not be directed to any particular proxy devices 304. The connection advertisement 306 may include a type of connection being requested (e.g., downlink or uplink), a client ID, a payload, and/or a priority level of the request. The type of the connection being requested may identify whether the client device 302 has data to be uploaded to a server through the cloud service 303 (e.g., via an uplink connection) or whether the client device 302 is checking for data to be downloaded from a server through the cloud service 303 (e.g., via a downlink connection). That is, a connection advertisement 306 sent from client device 302 may be a request for a connection to cloud service 303 that includes a client ID and an indication of a requested connection type (e.g., uplink or downlink). For example, a connection advertisement 306 may be an advertisement for uplink data upon demand sent to proxy device 304. Also, for example, a connection advertisement 306 may be an advertisement for downlink data (e.g., a request that the proxy device check for downlink data). When the client device 302 has data to be uploaded, the payload may include that data; however, in some examples, when there is data to be downloaded, the connection advertisement 306 will not include data in the payload.

Connection advertisements 306 may be prompted by a triggering event, such as a periodic or contextual signal indicating that the client device 302 can connect to the Internet or other WAN or it may be signaled by an indication that a previous connection with a host device has terminated, e.g., because of separation. The periodic or contextual signal may originate from the client device 302. For example, the client device 302 may be configured to request a WAN connection periodically (e.g., every minute, every hour, etc.) to check for data to be downloaded or to upload data that was collected (e.g., by sensors) or received (e.g., from the user) by the client device 302. Additionally, the triggering event might occur when the user requests data from the Internet or provides data to be backed-up via the client device 302. As noted, the triggering event might occur when the client device 302 identifies that it is no longer connected to a previously connected proxy device 304. In the example of FIG. 3, the connection advertisement 306 sent in response to such triggering events includes a client ID associated with the client device 302. The client ID can be used to uniquely identify client device 302.

### B. Proxy Reports Advertising Client to Cloud

Upon receipt of a connection advertisement 306 with a client ID, proxy device 304 can report the client ID to a cloud-based service to determine if there is cloud data available for the client device 302. As shown in FIG. 3, the proxy device 304 may report the client ID of the client device 302 that is advertising for downlink data to the cloud service 303, which can host a cloud-based service. The proxy device 304 may report the client ID to the cloud-based service by sending query 307. Query 307 may indicate that the client device 302 is advertising for downlink data, where the query 307 includes the client ID associated with client device 302. In some embodiments, a single query 307 may include multiple client identifiers (IDs) corresponding to client devices that are advertising for downlink data.

After reporting the client ID to the cloud-based service using query 307, the proxy device 304 may receive, from cloud service 303, a response 308 including one or more IDs of client devices for which that cloud service 303 has pending downlink data. That is, proxy device 304 may query cloud service 303 for available data for one or more client devices (each having different client IDs). For example, the user of proxy device 304 may be in a crowd where there are many client devices making requests for data from WAN. Proxy device 304 may receive one or more responses from cloud service 303, including an indication that data is available. In some embodiments, the response 308 may include the actual data to be delivered to the client device 302.

### C. Proxy Offer

Proxy device 304 may send a connection request 310 (i.e., a proxy offer) to client 302 in response to receiving an indication of available data from cloud service 303. That is, the proxy device 304 may respond to the client's connection advertisement 306 with a connection request 310 when data for the client device is available from the cloud service 303. The proxy device 304 may have already received such available data via response 308 from the cloud service 303. The data may include one or more messages, email alerts, and/or other data to queued be delivered to the client device 302 using a downlink path via the proxy device 304. In some embodiments, the connection request 310 may only be sent after receiving a response 308 indicating that there is available data at cloud service 303 that is queued for delivery to client device 302. In certain embodiments, the connection request 310 may only be sent to the client 302 after the proxy device 304 receives the available data from cloud service 303.

### III. PROVIDING CLOUD DATA TO CLIENT DEVICE

Setting up a full end-to-end connection between a client device and a cloud server takes time, and may be unnecessary in cases where the server has no data queued for delivery to the client. For example, setting up an end-to-end connection without having a host device first check a data queue (that might be empty) can unnecessarily drain the battery of both the host device and the client device. A host device may include a processor, such as an application processor. Use of the processor for establishing connections with a client device may increase power consumption by the host device. When the host device is a mobile device that is not in a charging state, such power consumption can cause battery drain.

Embodiments can minimize (or reduce) power consumption on a host device that is attributable to establishing communications connections with a client device. This can be achieved by establishing a downlink connection with a client device based on whether downlink data is available, e.g., only if the host device has determined that there is available downlink data for the client device. Such embodiments can avoid draining a host device's battery unnecessarily by avoiding establishing a connection with a client device when there is no available data pending for the client. This may be of particular interest when a user of the client device is different than a second user associated with the host device (i.e., the proxy device).

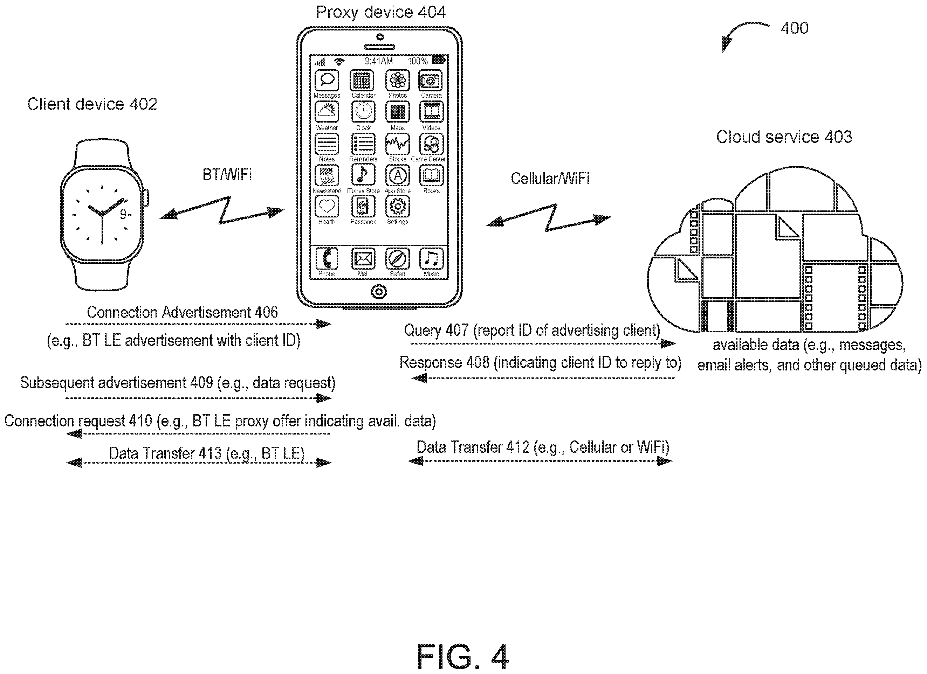

FIGs. 3 and 4 depict communications that improve the efficiency of providing cloud data to a client device by eliminating the need to establish multiple connections in order to transfer data from a cloud service to the client device. FIGs. 3 and 4 show examples of inter-device communications that may be used by systems 300 and 400, respectively, to facilitate efficient transfer of queued data between a cloud service and a client device via a host device. For example, as shown in FIG. 3, data transfer between cloud service 303 and a client device 302 can be optimized and managed using the embodiments described herein. Certain embodiments may establish a connection between a proxy device 304 and a client device 302 only when there is available data for client device 302 so that power consumption by proxy device 304 is reduced.

Once a proxy device 304 decides to establish a proxy connection for providing cloud data to a client device 302, the two devices attempt to download available cloud data as quickly and efficiently as possible. This is because there is a chance that a connection will terminate (end or be interrupted), sometimes before the download is complete, since the two devices may be moving and may not be moving together. For example, a client device 302 and a proxy device 304 may be mobile devices associated with two different users.

As a result, the two devices may be moving and may not be moving together. A cloud service 303 may host a cloud-based service that is configured to store and queue data that is to be delivered to the client device 302. An attempt to set up a connection may be initiated using advertisement 306 while the client and proxy are in proximity of one another other. However, connection request 310 may not be sent unless response 308 from cloud service 303 indicates there is available data for client device 302. This prevents needlessly sending a connection request 3 10 when there is no available data to transfer from the cloud service 303 to the client device 302. System 300 can be used to avoid initiating data transfer 313 between proxy 304 and client 302 unless available data has already been transferred from cloud service 303 to proxy 304. For example, a proxy indication of available data may be sent with response 308. In some embodiments, response 308 may have a payload including the available data. In alternative embodiments, after response 308 is received with the proxy indication of available data, data transfer 312 may then take place between cloud service 303 and the proxy device 304 to download the available data from cloud service 303 to the proxy device 304.

Connection request 310 may not be sent to client device 302 until the available data has been downloaded to proxy device 304. In this way, system 300 will not initiate data transfer 313 between proxy device 304 and client device 302 until the available data has been received by proxy device 304. This eliminates inefficiencies inherent in requiring client device 302 to attempt to connect to different proxies and establishing wasted connections with proxies before establishing a connection with a proxy that has available downlink data for the client device 302. Similarly, by sending connection request 310 only after using query 307 and response 308 to determine that there is available data, system 300 avoids using network bandwidth and battery resources to establish unneeded connections.

### A. Proxy Receives Request from Client Device

A proxy device may receive a request from a client device, where the request is an advertisement message indicating that the client is checking for downlink data. Proxy devices, such as the proxy device 304 of FIG. 3, may be configured to host WAN access (e.g., the Internet) for a client device 302. The client device 302 may provide a connection advertisement 306 requesting such WAN access from the proxy device 304. The advertisement 306 from the client device 302 may include an indication of a requested connection type (e.g., downlink) and a client ID. The connection advertisement 306 can be a request that the proxy device 304 check for available downlink data pending for the client at cloud service 303.

FIG. 3 shows communications for receiving a request for data from a client device 302, and then transferring the requested data between cloud service 303 and client device 302 via a proxy device 304. As noted, the proxy device 304 can receive a connection advertisement 306 with a client ID uniquely identifying client device 302. Connection advertisement 306 is a request for available downlink data sent from the client 302 to the proxy 304. Connection advertisement 306 may include a payload indicating that client device 302 is checking for downlink data, and a unique ID associated with client device 302.

FIG. 4 shows an example of how a client device 402 in system 400 can send a first connection advertisement 406 to proxy device 404. The connection advertisement 406 may indicate that the client device 402 is checking for downlink data. In system 400, this initial connection advertisement 406 includes the ID of the client device 402 along with a request to check for downlink data that is available at cloud service 403. The ID may be a unique device ID for client device 402.

### B. Proxy Queries Cloud

A proxy device may query a cloud-based service to determine if there is any available data for a particular client device. The cloud-based service may store and queue data for delivery to multiple client devices. The queued data may be pending data to be delivered to particular, identified client devices. For example, the queued data may include one or more messages and alerts that are to be transmitted to a particular client device, where the client device is identified by a client ID. In the example of FIG. 3, proxy device 304 may send a client ID of client device 302 that is advertising for downlink data to cloud service 303. The client ID can be sent in a query 307 that reports the client ID of client device 302 to cloud service 303. That is, query 307 may be a message querying cloud service 303 to determine whether the WAN has any available data for client device 302. In the example of FIG. 3, proxy device 304 may determine whether there is available data queued at the cloud service 303 for delivery to client device 302 based on a response 308 to query 307. For example, this determination may be based on the client's ID being returned from the cloud service 303 in a response 308. In some embodiments, the response 308 can include a payload with the available data. In alternative embodiments, data transfer 312 is performed to download the available data from cloud service 303 after response 308 is sent to proxy device 304.

As shown in FIG. 4, a query 407 may be sent from proxy device 404 to cloud service 403 where the query 407 includes the unique ID of client device 402. In this example, client device 402 initiated a request to check for available data at cloud service 403, and the check is performed by proxy device 404. By sending query 407, proxy device 404 reports the client ID of client device 402 to cloud service 403 and indicates that client device 402 is advertising for downlink data. The downlink data can be data that is available for client device 402 (i.e., available data). The available data may be stored in a cache, memory, or table at cloud service 403. For example, the available data may be stored in cloud service 403. The available data may be associated with one or more target client devices identified by respective client IDs. The available data may be flagged as being queued for delivery until it has been transmitted from a cloud-based service hosted by cloud service 403 to proxy device 404.

### C. Proxy Receives Data

A proxy device may receive available data from a cloud-based service. In certain embodiments, the available data may be temporarily stored at the proxy until it can be transferred to the requesting client device. For example, proxy device 304 may receive available data from the cloud service 303 in a payload of response 308 and temporarily store the available data in a local cache. Conversely, the response 308 may advise the proxy device 304 that the client device 302 (identified by client ID) has pending downlink data to be transferred, but not include the available data itself. That is, response 308 may include a proxy indication of available data for one or more client IDs, but not include a payload with available data. When the response 308 does not include a payload with the available data, the data may be subsequently downloaded from the cloud service 303 to the proxy device 304 by performing data transfer 312. Data transfer 312 may be performed to relay the available data to the proxy device 304 after a connection between the client device 302 and the proxy device 304 is established so that data transfer 313 may also be performed. Data transfer 313 may be performed to transfer the available data from the proxy 304 to the client device 302 upon completion of (or in conjunction with) data transfer 312. Data transfers 312 and 313 may be performed concurrently after establishing an end-to-end connection between the cloud service 303 and the client device 302 via the proxy device 304. In this way, available data may be downloaded from the cloud service 303 to the client device 302 without storing the data at the proxy device 304.

In certain embodiments, once received at proxy device 304, the available data may be temporarily stored locally at the proxy for subsequent delivery to the client device 302. In an embodiment, the data may be stored in a memory or computer readable medium of the proxy device 304. For example, data may be stored in an in-memory table including the client ID and the available data to be delivered. In the example embodiment shown in FIG. 3, the proxy device 304 can send connection request 310 to client 302 upon receipt of downlink data for that client from cloud service 303. If the proxy device 304 is unable to establish a connection with the client device 302 (e.g., no response to the connection request 310 is received), the available data stored at the proxy device 304 may be deleted.

In the embodiment shown in FIG. 4, a connection advertisement 406 from an advertising client device 402 includes a client ID that can be used by a proxy device 404 and the cloud service 403 to uniquely identify that client device. In this way, when a potential proxy device 404 receives an initial connection advertisement 406 from client device 402, the proxy can use query 407 to pass the client ID to a server connected to cloud service 403 that is associated with providing data to that client device. If the server determines that that the client device 402 has available data waiting for it, then that server may send response 408 to provide an proxy indication of available data back to the proxy device 404 that the proxy should respond to the client device 402.

In some embodiments, the response 408 may indicate one or more properties of the available data. For example, properties of the available data include a priority of the available data, an amount of the available data (e.g., the size of the data), and/or a type or category of the available data. Then, in the example shown in FIG. 4, when a subsequent connection advertisement 409 is received from that client device 402, the proxy device 404 may respond with a connection request 410 volunteering to be a proxy. This subsequent connection advertisement 409 may be used in cases where a response window for the initial connection advertisement 406 has expired. In such cases, the proxy device 404 may wait for the subsequent advertisement 409 and respond to that advertisement 409 with the connection request 410 indicating that there is available data. For example, when a time frame or window for replying to the initial connection advertisement 406 passes before response 408 is received, proxy device 404 may wait for subsequent advertisement 409 before sending connection request 410. In certain embodiments, one or more properties of the available data may be indicated in the connection request 410 sent to the client device 402. According to these embodiments, the client device 402 may only accept the connection request 410 in response to determining that the indicated properties correspond to data properties that the client device 402 desires. For example, the client device 402 may only respond to the connection request 410 if a priority level of the available data exceeds a priority threshold. Similarly, the client device 402 may only respond to the connection request 410 if a data type (or category) of the available data indicated in the connection request corresponds to a data type (or category) desired by the client device 402. Also, for example, the client device 402 may only accept the connection request 410 if the size of the available data indicated in the connection request falls within a desired size range.

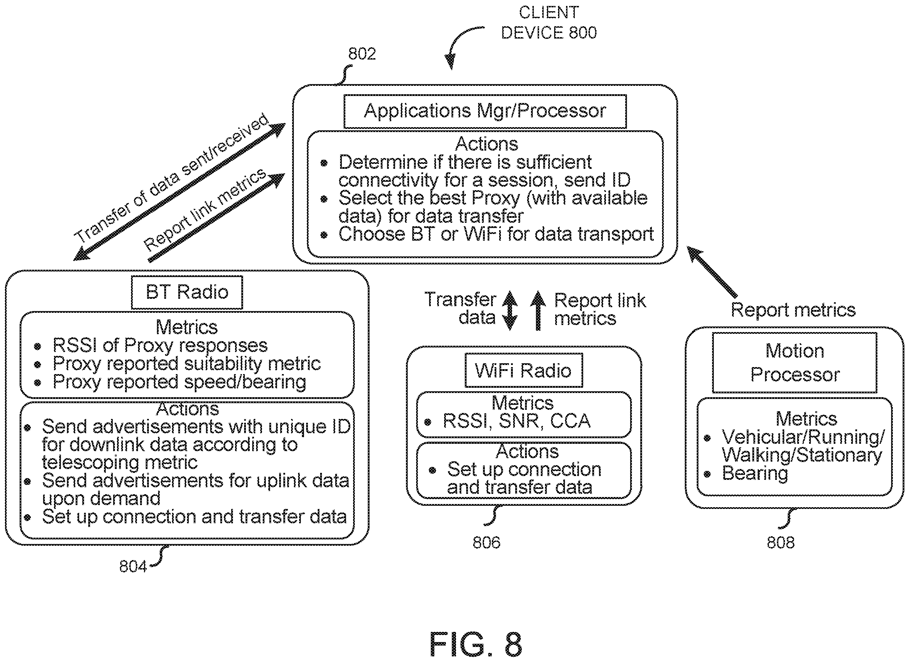

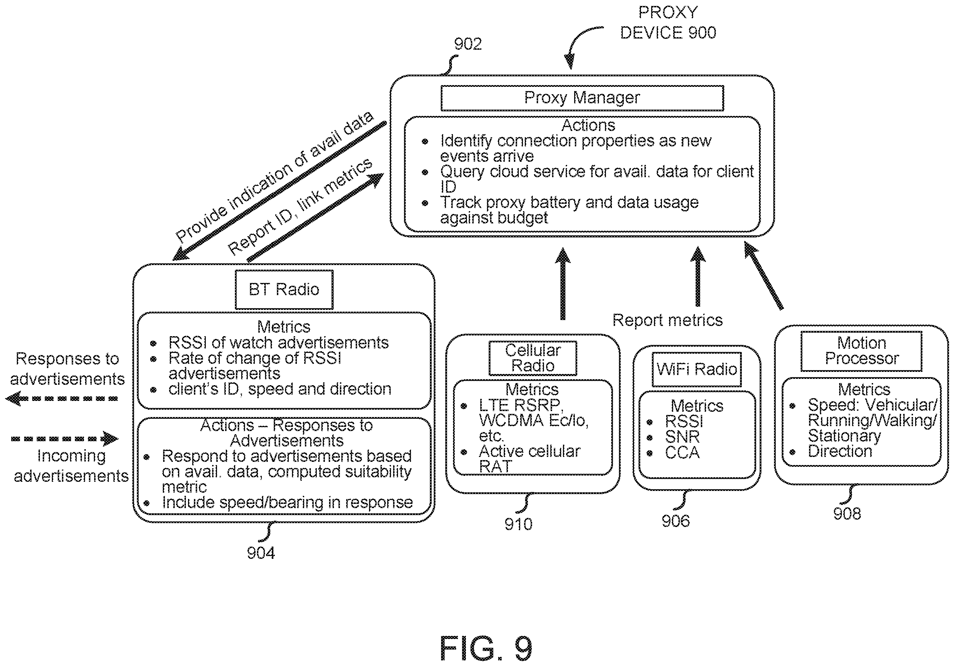

According to certain embodiments, a query 407 (or a connection request 410) may not be sent due to properties of proxy device 404 and/or properties of the client device 402. For example, if it is determined that the proxy device 404 and the client device 402 are moving in different directions, the proxy device 404 may not send connection request 410 to the client device 402. Similarly, a query 407 may not be sent to cloud service 403 based on determining that the proxy device 404 is unlikely to be able to establish a connection with the client device 402 (e.g., due to the devices moving in different directions, metrics associated with advertisements from client device 402, or other criteria). Examples of such criteria and metrics are provided in more detail with reference to FIGs. 8 and 9. The proxy device 404 may send the connection request 410 at various times and use various criteria. For example, the connection request 410 may be sent when the subsequent advertisement 409 is received from the client device 402. Such communications may be useful in cases where the client device 402 has moved to be out of range of proxy device 404 by the time that the response 408 is received from the cloud-based service 403.

Proxy device 404 may store and queue the available data before periodically sending a connection request and the data to the client device 402. The client device 402 may send out data requests periodically (e.g., periodic connection advertisements 406 and 409), as any current connection may be only temporary while client device 402 is within range of a host device to which a connection is made. The subsequent advertisement message 409 shown in FIG. 4 is an example of a periodic data request. Subsequent advertisement message 409 is a request for available data sent after an initial connection advertisement 406 has been sent as a request to check for downlink data. Certain embodiments avoid sending multiple connection requests 410 and do not establish a connection for data transfer 413 between proxy 404 and client 402 when there is little (or no) available data for that client (i.e., when a cloud service hosted by cloud service 403 has no data queued for the client 402). For example, the proxy device 404 may send data with a connection request 410 after receiving response 408 with a proxy indication of available data, and upon receiving a subsequent advertisement 409 from the client 402.

### D. Providing Data to Client

Data may be provided to a client device after determining that there is available data for the client at a cloud-based service. The cloud-based service may be hosted on one or more servers connected to a WAN. In the example of FIG. 3, available data for the client device 302 may be transferred from cloud service 303 to proxy device 304 by performing data transfer 312. Then, the available data may be provided to client device 302 using data transfer 313 after establishing a connection between a proxy device 304 and the client device 302. For example, once the connection request 310 is accepted by the client device 302, data transfers 312 and 313 may take place in order to transmit the available data from the cloud service 303 to the client device 302 via the proxy device 304. In some embodiments, data transfer 312 may be performed to transmit the available data from the cloud service 303 to the proxy device 304, and after the connection request 310 is accepted by the client device 302, data transfer 313 may take place in order to transmit the available data from the proxy device 304 to the client device 302. For example, the client device 302 may send a message back to the proxy device 304 (not shown) accepting the connection request 3 10 before the proxy device 304 initiates data transfer 313.

In the example provided in FIG. 4, available data is provided to the client device 402 after determining that there is available data at cloud service 403, and then establishing a connection between a proxy device 404 and the client device 402. The connection may be established in response to receiving a subsequent advertisement 409. For example, after sending subsequent advertisement 409, the client device 402 responds to connection request 410 from the proxy device 404, and data transfer 413 may be performed in order to transfer the available data from the proxy device 404 to the client device 402. According to this example, the proxy device 404 sends query 407 to check for available data at cloud service 403, and the proxy device 404 may not respond back to the client device 402 with connection request 410 until the proxy device 404 has received response 408 from cloud service 403 indicating that there is available data for the client device 402. In cases where a response window for the initial connection advertisement 406 has expired, the proxy device 404 can wait for subsequent advertisement 409 and respond to that subsequent advertisement 409 with the connection request 410 indicating that there is available data. After receiving a response to the connection request 410, the proxy device 404 may perform data transfer 413 to send the available data to the client device 402.

### IV. METHODS

Various methods can be performed by a proxy device to provide data from a cloud-based service to a client device. Methods can be performed by the proxy device to establish an end-to-end connection for communicating data between a cloud-based service and a client device via the proxy. Methods can be performed by a client device to request a connection to a network. Methods can be performed by the client device to generate and send an advertisement message that includes an ID associated with the client and a requested connection type along with a request for data to be communicated with a cloud-based service.

### A. Proxy Determining Whether Data is Available For Client

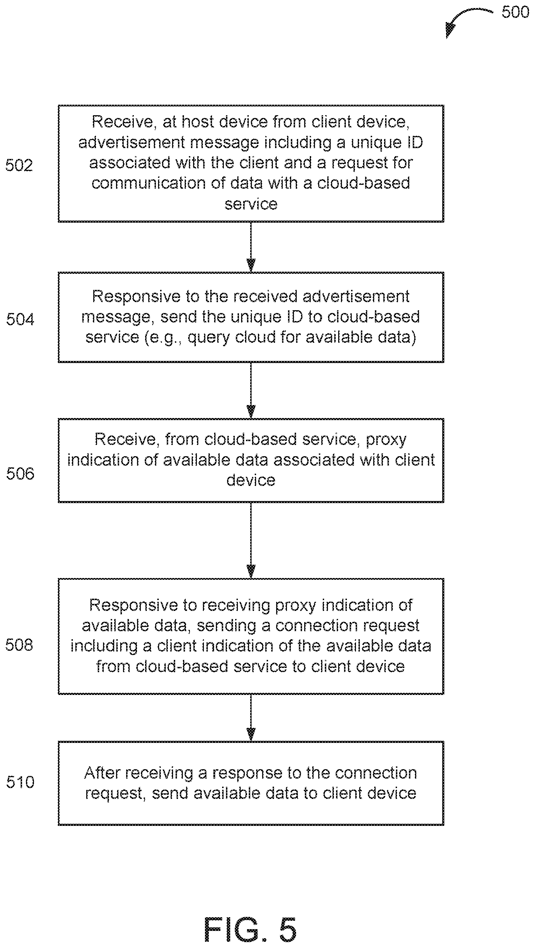

FIG. 5 is a flowchart of an example method of using a proxy device to establish a proxy connection for communicating data between a cloud-based service and a client device. The method 500 of FIG. 5 may be implemented by a proxy device (e.g., proxy device 404 of FIG. 4) by executing computer-executable instructions or the like stored thereon. The proxy device may be configured with a first wireless interface for communicating with a first network (e.g., a LAN with the client device 402 of FIG. 4), a second wireless interface for communicating with a second network (e.g., cloud service 403 of FIG. 4, Internet, etc.), a memory, and a processor coupled to the memory, and/or to the wireless interfaces.

At block 502, the host device (e.g., proxy device) may receive, from a client device, an advertisement message including request for communication of data with a network. For example, the advertisement message may include a request to upload or download data from the Internet or the like. The advertisement message includes a unique ID associated with the client device and a request for to check for available data that is queued for the client at a cloud-based service. For example, the advertisement message may also include a payload (e.g., the data to be uploaded) and/or other information about content to be communicated.

At block 504, in response to receiving the advertisement message, the proxy device may send the client device's unique ID to a cloud-based service. For example, 504 can be performed by sending a query for available downlink data to the cloud-based service, where the query includes the unique ID associated with the advertising client device. Queries for various client devices can be made. For example, the proxy device can send multiple queries to the cloud service before receiving a response to a first query.

At block 506, the proxy device may receive, from the cloud-based service, a proxy indication of available data associated with the client device. For example, the host device may receive a response to a query for available data, where the response indicates the client device's ID and an indication that there is available data pending for the client. In some embodiments, the response from the cloud-based service may include a payload with the available data. The response can provide any suitable indication that data is available, such as flags, information about the data, and the data itself.

At block 508, in response to receiving the proxy indication of available data, the proxy device may send a connection request including a client indication of the available data to the client device. For example, the client indication of the available data may indicate that the cloud-based service has available data queued for delivery to the advertising client device. In certain embodiments, a payload of the connection request may include the available data.

The proxy device can send the connection request at various times and use various criteria. For example, the connection request can be sent when a second advertisement is received from the client device (e.g., as in FIG. 4). Alternatively, the proxy device may attempt to initiate a transfer to the client device upon receipt of all (or a portion) of the data, without waiting for a second advertisement message, e.g., as in FIG. 3.

Other criteria can be used to determine whether and when to send the connection request. For example, the client device and the proxy device may be moving in other directions. Examples of such criteria are provided in more detail with reference to FIGs. 8 and 9.

At block 510, the proxy device may send, via a wireless interface, the available data to the client device. This may include transferring the available data to the client device after receiving a response to the connection request. For example, block 510 can be performed using data transfer 313 of FIG. 3 or data transfer 413 of FIG. 4. In other embodiments, the available data may be sent via the connection request or through some other mechanism.

### B. Requesting Data by Client

In some embodiments, a client device can indicate a requested connection type when requesting a connection to a network. For example, a client device may generate and send a connection advertisement that includes a client ID and a requested connection type (e.g., downlink or uplink).

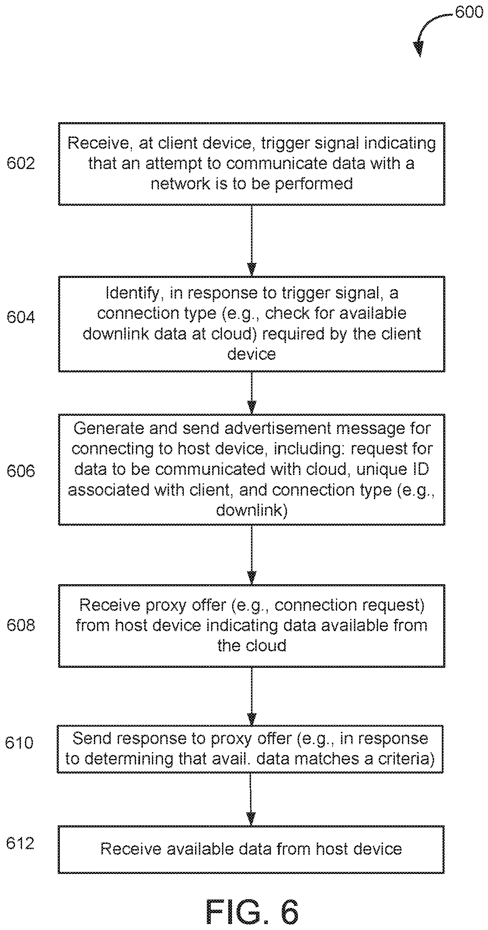

FIG. 6 is a flowchart of an example method of using a client device to request a connection to a network. In particular, FIG. 6 illustrates a method 600 of using a client device to provide an indication of a requested connection type and a unique client ID within an advertisement message requesting a connection to a network. The method 600 of FIG. 6 may be implemented, e.g., by the client device 402 of FIG. 4, by executing computer-executable instructions or the like stored thereon. A client device may be configured with a wireless interface, a memory, and a processor coupled to the memory, and/or to the wireless interface.

At block 602, a client device may receive a trigger signal indicating that an attempt to communicate data with a network is being performed. In other words, the client device may receive an indication that the client device is attempting to communicate data with a network (e.g., a WAN such as the Internet or the like). As various examples, the trigger signal may be based on a periodic check for available data from the WAN, a periodic check to upload data through the WAN, a selection of data (e.g., by the user) to be uploaded or downloaded, an event at the client device (e.g., obtaining data), or the like. For example, the user may be attempting to send a message from the client device or may be attempting to download content from the Internet.

At block 604, the client device may identify, at least in response to the trigger signal, a connection type required by the client device. For example, as noted, the client device may identify whether it has data to be uploaded to a server through a WAN, or whether the client device is checking for available data to be downloaded from a cloud server through a WAN. The connection type may be identified by the client device as an uplink connection in anticipation of desiring to upload data. Conversely, the connection type may be identified by the client as a downlink connection in anticipation of desiring to check for data to be downloaded.

At block 606, once connection type is identified, the client device may be configured to generate an advertisement message for connecting to a host, such as proxy device 304 of FIG. 3. The advertisement message may include an ID associated with the client device and an indication of the requested connection type desired by the client device. The ID may be a unique client ID, such as, for example a device ID for the client device. The advertisement message may also include a request for the data to be communicated with the network (e.g., the WAN). The client device may provide the generated advertisement message (e.g., via a wireless interface) to a host device for requesting a wireless connection to the host device. The advertisement message may include a data payload to be uploaded to the WAN. In various examples, the advertisement message may include the client device's ID along with a request for data to be downloaded to the client device and may, in some instances, also include a location at which the data may be located (e.g., a resource locator, an address, or the like) and/or an identifier of the data.

At block 608, the client device may receive a proxy offer from a host device. For example, the proxy offer may be a connection request from a host device indicating that data is available for the client from a cloud-based service. In some embodiments, the connection request may further indicate that the available data has been downloaded from the cloud-based service to the proxy device.

At block 610, the client device may send a response to the proxy offer in order to establish a data connection with the host device. After sending the response to the proxy offer, at 612 the client device may receive the available data from the host device. For example, the available data may be received by performing data transfer 313 of FIG. 3 or data transfer 413 of FIG. 4.

In some embodiments, the client device may be associated with a first user and the host device may be associated with a second user. In some cases, the first user and the second user may be different users. Further, in some examples, the client device may determine whether the first user is different from the second user (e.g., in response to the trigger signal), and may cancel the request for the wireless connection to the host device when the user is not different from the second user. In other words, if the potential host device is the user's own device (i.e., the same user associated with the client device), the client device may not need to perform one or more of the steps or all of the operations associated with steps 606, 608, or 610, since the two devices may be configured to automatically communicate with one another (e.g., for providing Internet access to the client device).

### V. ADDITIONAL EMBODIMENTS

The network connection management can be performed without having to explicitly set up another device on the host device. In the past, one might have needed to allow tethering explicitly on a user interface and specify a particular device to gain network access. In some embodiments of the present disclosure, a user can specify only some general parameters, and not have to allow access on a device-by-device basis. Since acting as a host device may cause battery drain on the proxy device, and may use a portion of the data allowance from a cellular data plan of the proxy device (which may belong to a different user than the client device), each proxy device can decide whether to volunteer to serve as a host. Additionally, once a potential host volunteers, each client device can decide whether to accept the proxy connection. This section describes inter-device communications and metrics that may be used to facilitate the network connection management (i.e., these decisions).

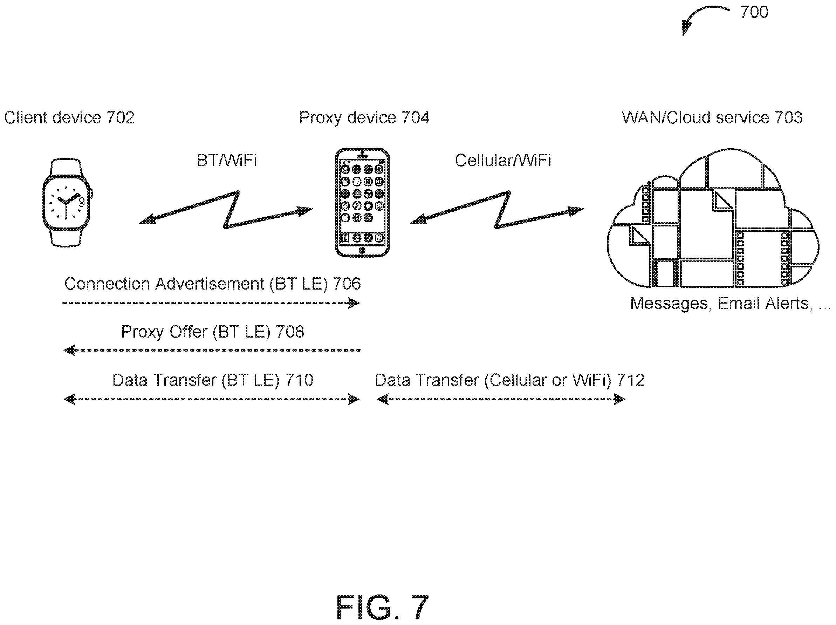

FIG. 7 is a block diagram of a system 700 according to various embodiments. FIG. 7 and other figures are merely illustrative of an embodiment or implementation, or of aspects of an embodiment or implementation disclosed herein, and should not limit the scope of the disclosure. One of ordinary skill in the art may recognize through this disclosure and the teachings presented herein other variations, modifications, and/or alternatives to those embodiments or implementations illustrated in the figures. FIG. 7 is one example of a system that may use a host device to provide data to client devices. The devices in system 700 can include hardware and/or software elements.

FIG. 7 illustrates signaling between a client device 702, a proxy device 704, and a cloud service 703 to which proxy device 704 can connect. Client device 702 of a user may be in motion at the time the client device 702 requests a network connection (e.g., while being worn on a user exercising or otherwise moving). As such, the client device 702 may send out connection requests regularly (e.g., periodically or the like), as any current connection may be only temporary while client device 702 is within range of a host device to which a connection is made. Especially since host devices may also be in motion, connections with host devices may be brief for each client device.

In one aspect, the client device 702 may request a WAN connection from a proxy device 704 by providing a connection advertisement 706. Generally, connection advertisements 706 may be any type of request for a connection and may not be directed to any particular proxy devices 704. The connection advertisement 706 may include a type of connection being requested, an identifier of the client device 702 (e.g., a device identification (ID) or the like), a payload, and/or a priority level of the request. The type of the connection being requested may identify whether the client device 702 has data to be uploaded to a server through the WAN (e.g., via an uplink connection) or whether the client device 702 is checking for data to be downloaded from a server through the WAN (e.g., via a downlink connection). That is, an advertisement message 706 sent from client device 702 may be a request for WAN connection that includes an indication of a requested connection type (e.g., uplink or downlink). For example, the advertisement message 706 may be an advertisement for uplink data upon demand sent to proxy device 704. Also, for example, the advertisement message 706 may be an advertisement for downlink data (e.g., a request that the host device check for downlink data). When the client device 702 has data to be uploaded, the payload may include that data; however, in some examples, even when there is data to be downloaded, the connection advertisement 706 may not contain the payload.

The connection advertisements 706 may be prompted by a triggering event, such as a periodic or contextual signal indicating that the client device 702 can connect to the Internet or other WAN or it may be signaled by an indication that a previous connection with a host device has terminated, e.g., because of separation. For example, the client device 702 may be configured to request a WAN connection periodically (e.g., every minute, every hour, etc.) to check for data to be downloaded or to upload data that was collected (e.g., by sensors) or received (e.g., from the user) by the client device 702. Additionally, the triggering event might occur when the user requests data from the Internet or provides data to be backed-up via the client device 702. As noted, the triggering event might occur when the client device 702 identifies that it is no longer connected to a previously connected proxy device 704.

Proxy devices, such as the proxy device 704 of FIG. 7, may be configured to host WAN access (e.g., the Internet) for a client device 702. For example, a client device 702 may provide a connection advertisement, requesting such WAN access from the proxy device 704. The advertisement from the client device 702 may include an indication of a requested connection type (e.g., downlink). For example, the client device 702 can send an advertisement for downlink data. The advertisement can be a request that the proxy device check for available downlink data pending for the client at the WAN.

In some embodiments, a connection may be established by taking one or more of several factors into consideration, including the importance of the data to be communicated. For example, the data may be identified as important by the user (e.g., a message to another user on a priority list, a message flagged as urgent, data that is time sensitive, data that has been waiting to be transmitted for a long time, etc.) or it may be determined to be important based on the amount of time since the client device has been attempting to transmit it. The importance or priority of the data may be indicated in an advertisement message sent from a client device.

FIG. 8 is a block diagram illustrating example embodiments of a client device 800 capable of performing at least some of the features described at least with reference to the client devices of FIGs. 1-7. The client device 800 may be configured to perform operations and/or embodiments described above with respect to method 800 and/or method of FIG. 8. In some embodiments, the client device 800 may be configured with a processor 802. Processor 802 may be responsible for determining whether there is sufficient connectivity for a session (e.g., whether the client device 800 will likely be able to connect to a proxy device). Processor 802 may also select the best proxy device for data transfer when there are multiple proxy offers or connection requests received by the client device. Processor 802 may also determine which radio access technology (RAT) to use for the data transport when a connection is established with a proxy device 850 (e.g., whether to use BT or WiFi for the data transport).

Client device 800 may also be equipped with a BT radio 804 (e.g., supporting either or both of BT low-energy (BTLE) and BT classic) and a WiFi radio 806, as well as a motion processor 808. BT radio 804 or WiFi radio 806 can be used to communicate with the proxy device. BT radio 804 may track received signal strength indication (RSSI) metrics associated with proxy responses, network connection properties reported by the proxy device, and/or a communication policy preference reported by the proxy device. These values and metrics may be reported to the processor 802. BT radio 804 may also send advertisements for downlink data according to a telescoping metric (e.g., to the proxy device), send advertisements for uplink data upon demand (e.g., to the proxy device), and/or set up connections for the transfer of data between the client device 800 and the proxy device. WiFi radio 806 may also track and report (e.g., to the processor 802) RSSI metrics, and may also track and report signal-to-noise ratio (SNR) and/or congestion control algorithm (CCA) metrics. WiFi radio 806 may also be configured to set up a connection between the client device 800 and the proxy device and/or transfer data between the two. Motion processor 808 may be configured to identify, detect, or otherwise determine vehicular, running, walking, stationary, etc., metrics as well as bearing/direction metrics associated with the client device 800.

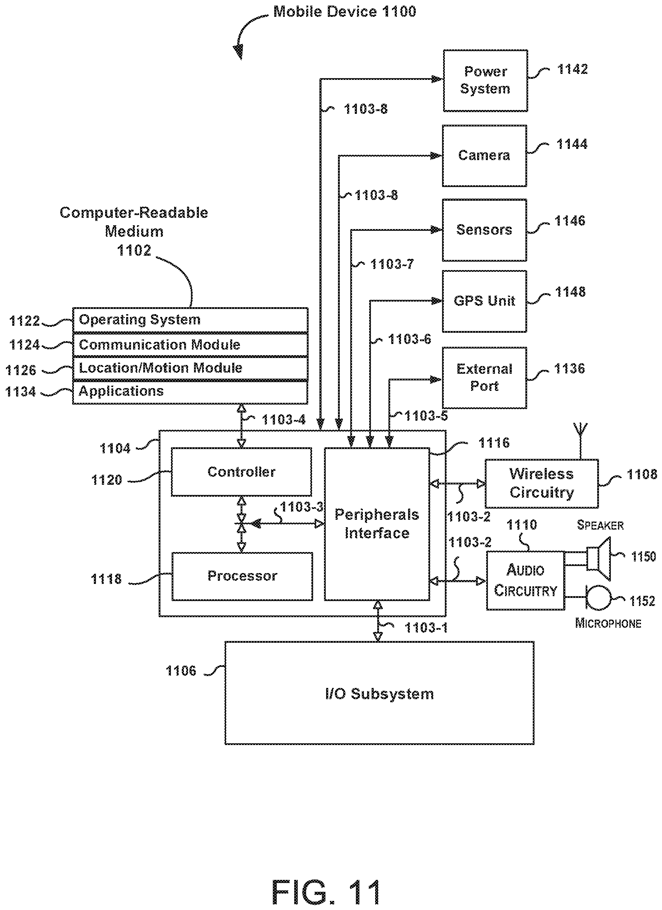

FIG. 9 is a block diagram illustrating example embodiments of a proxy device 900 capable of performing at least some of the features described at least with reference to the proxy devices of FIGs. 1-7. In some embodiments, the proxy device 900 may be configured with a proxy manager 902. Proxy manager 902 may be responsible for determining a current network connection property (e.g., as new events arrive) and/or track proxy battery and data usage against the budget (e.g., based on an account with a service provider or the like). Proxy manager 902 may also be responsible for selecting an appropriate RAT. In some embodiments, a response to an advertisement from a client device (e.g., the client device 1100 of FIG. 11 or any of the client devices described with respect to FIGs. 1-10) may be an offer to serve as a proxy (e.g., a proxy offer). As noted, a network connection property and/or a communication policy preference may be used by the proxy manager 902 to determine a route the proxy device will use to communicate data with a network. In some embodiments, an initial communication between the client device and the proxy device 900 may be via Bluetooth low-energy (BTLE) or the like; however, the proxy manager 902 may determine to switch RATs and utilize a different technology (or radio) for future communications. In other words, a BT radio 904 may receive incoming advertisements from client devices, but the proxy device 900 may respond with a proxy offer using a WiFi radio 906. The proxy connection may then utilize the WiFi radio 906 even though the initial communication was via BTLE. The opposite scenario, or alternative scenarios, may also be implemented as desired.

As noted, proxy device 900 may be equipped with both a BT radio 904 and a WiFi radio 906, as well as a motion processor 908 and a cellular radio 910. In some embodiments, the radios may report changes in metrics as events to the proxy manager 902. BT radio 904 may track RSSI metrics associated with advertisements from a client device, rate of change of RSSI for advertisements, and/or the speed and bearing of the client device. These metrics may be reported to the proxy manager 902. BT radio 904 may also select a route and respond to advertisements based on a network connection property of the proxy device 900 and indicate a route to the client device (e.g., in proxy offers). WiFi radio 906 may also track and report (e.g., to the proxy manager 902) RSSI metrics, and may also track and report SNR and/or CCA metrics. Motion processor 908 may be configured to identify, detect, or otherwise determine vehicular, running, walking, stationary, etc., metrics as well as bearing/direction metrics of the proxy device 900. Further, cellular radio 910 may track LTE, RSRP, WCDMA, etc. metrics as well as active cellular RAT metrics (e.g., for determining which cellular technology to use when multiple technologies are available).

According to one embodiment, radio devices 904, 910, 906 of the proxy device 900 may be configured to report link metrics such as, but not limited to, RSSI metrics, signal-to-noise ratio metrics, and/or congestion control algorithm metrics. In some examples, a network connection property of the proxy device 900 may be based on one or more of the link metrics. The proxy device 900 may be capable of updating one or more of its network connection properties based on the link metrics. For example, as a received signal strength indication increases for a particular communication link, a corresponding network connection property can be updated. The signal-to-noise ratio metrics may define an amount of signal strength associated with the communication with the proxy device 900 with respect to noise detected during the communication with the host device. The proxy device 900 may also be capable of updating a network connection property as the signal-to-noise ratio metrics increase. Further, the congestion control algorithm (CCA) metrics may define a calculated amount of congestion associated with the communication between a client device and the proxy device 900, and the proxy device 900 may be capable of updating a network connection property as the congestion control algorithm metrics increase.

### VI. DEVICES

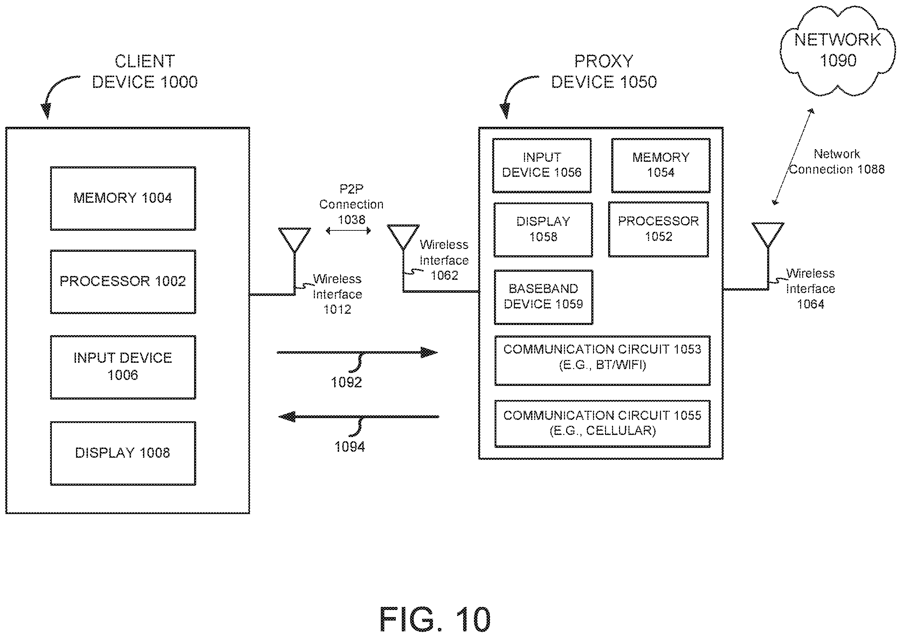

FIG. 10 illustrates additional example client devices and proxy (host) devices that may be used, e.g., in conjunction with or as part of systems 100, 300, or 400 of FIGs. 1, 3, and 4, respectively, to implement the management of proxy connections. While two embodiments are illustrated by these figures, various implementations may include any number of client devices, host devices, and different networks that may be supported by the devices in a particular setup.

It should be apparent that the systems shown in FIG. 10 illustrate several example embodiments, but that other similar embodiments can have more or fewer components than what is shown. Other embodiments may also include different configurations of the illustrated components, while remaining within the scope of the innovations herein.

FIG. 10 illustrates a client device and a host device that may be used in conjunction with or as part of systems 100, 300, and 400 of FIGs. 1, 3, and 4 to implement the optimization of proxy connections for transferring data between a network and the client device via the host device. While two embodiments are illustrated by these figures, various implementations may include any number of client devices, host devices, and different networks which may be supported by the devices in a particular setup.

It should be apparent that the system shown in FIG. 10 illustrates one embodiment and that other similar embodiments can have more or fewer components than what is shown. Other embodiments may also include different configurations of the illustrated components, while remaining within the scope of the innovations herein.

FIG. 10 illustrates an embodiment with client device 1000, proxy (host) device 1050, and network 1090. Client device 1000 may be any device accessible by a wireless interface, including a desktop computer, a laptop computer, a smartphone, a tablet computer, a wearable device (e.g., a network enabled watch, earpiece, or necklace,) a networked appliance (e.g., a network enabled refrigerator or clothes washer,) media player, personal digital assistant, key fob, access card, multi-function device, game system, or any other such client device.

In some embodiments, once a client device 1000 or a proxy device 1050 decides to establish a proxy connection, the two devices attempt to upload and/or download the appropriate data as quickly and efficiently as possible. This is because there is a chance that the connection will terminate (end or be interrupted), sometimes before the transmission is complete, since the two devices may be moving and may not be moving together. For example, it may be possible for a user with a client device 1000 to be walking past a user with a proxy device 1050 and have the client device 1000 access the Internet through the proxy device 1050. If the users are walking slowly (e.g., in a crowded area, while waiting for public transit, at a park, or while one or both are waiting on a traffic light or crosswalk), the two devices may establish a connection and transmit data while the two users are in effective communication range of one another. In some embodiments, non-standard transfer protocols may be utilized by the two devices to enable a faster connection and data transfer.

In some embodiments, when the client device 1000 and/or proxy device 1050 calculate and/or provide their respective speeds, they may provide a classification or category of speed (e.g., slow, medium, fast, etc.) as opposed to a raw speed (e.g., feet per second or the like). As such, matching a speed and bearing may include relative matches, such that the two devices match within a category and do not necessarily have to match exactly.

Additionally, in some embodiments, a proxy device 1050 may receive multiple connection advertisements (also referred to as "advertisement messages" or "connection requests") from multiple client devices. However, the proxy device 1050 may simply respond to the first advertisement that it receives, either not aware that it will receive other advertisements or simply as an efficiency (e.g., it could be configured to always respond to the next advertisement received). In some cases, the proxy device 1050 may also track changes between advertisements. For example, based on a device ID or the like, the proxy device 1050 may be able to differentiate between advertisements from different client devices, identifying overall changes within the set of advertisements (e.g., from all client devices) and/or identifying changes within the advertisements from each particular client device 1000. As such, the proxy device 1050 may track that the RSSI or other information in the advertisement that indicates that the suitability of connecting with a particular client device 1000 may be improving. In some instances, even if the factors are not ideal (or are below the thresholds for providing a proxy offer), the proxy device 1050 may provide a proxy offer since it can infer that the conditions are improving and will eventually be good enough to offer a solid proxy connection. In some examples, the proxy device 1050 may behave as a router.

Client device 1000 may be any device accessible by a wireless interface, including a desktop computer, a laptop computer, a smartphone, a tablet computer, a wearable device (e.g., a network enabled watch, earpiece, or necklace,) a networked appliance (e.g., a network enabled refrigerator or clothes washer,) media player, personal digital assistant, key fob, access card, multi-function device, game system, or any other such client device. Client device 1000 comprises memory 1004, processor 1002, input device 1006, display 1008, and wireless interface 1012. Host device 1050 includes processor 1052, memory 1054, input device 1056, display 1058, wireless interface 1062, wireless interface 1064, and baseband device 1059.

Host device 1050 may be any communication device capable of providing data sharing to a client device 1000 in a fashion similar to what is described above for data sharing from various host devices to various client devices. Certain embodiments of host devices may have multiple communications interfaces, such that as part of data sharing performed by a host device, the host device communicates with a network using one communication interface based on a first communication protocol, and a the host device communicates with a client device using a second communication interface different from the first communication interface and based on a second communication protocol different from the first communication protocol. Examples of such host devices may include smart phones, desktop computers, laptop computers, and other such network enabled computing devices.

Client device 1000 may communicate with host device 1050 via connection 1038 (also referred to as the second network, where the first network is network connection 1088). Similarly, host device 1050 may communicate with network 1090 via connection 1088. In further embodiments, client device 1000 may also create a connection with one or more other networks including network 1090 (e.g., via a separate wireless interface and/or via the proxy connection 1038). In some examples, the connection 1038 (or at least the two wireless interfaces 1012, 1062) may be utilized for providing or otherwise communicating the advertisement message 1092 (e.g., from the client device 1000 to the proxy device 1050) and/or the proxy offer 1094 (e.g., from the proxy device 1050 to the client device 1000).

Different embodiments may implement connection 1038, connection 1088, or aspects of these connections using one or more communication protocols or technologies, including time division multiple access (TDMA), code division multiple access (CDMA), global system for mobile communications (GSM), Enhanced Data GSM Environment (EDGE), wideband code division multiple access (W-CDMA), Long Term Evolution (LTE), LTE-Advanced, WiFi (such as IEEE 802.11a, IEEE 802.11b, IEEE 802.11g and/or IEEE 802.11n), Bluetooth, Wi-MAX, voice over Internet Protocol (VoIP), near field communication protocol (NFC), a protocol for email, instant messaging, and/or a short message service (SMS), or any other suitable communication protocol, including communication protocols not yet developed as of the filing date of this document. A host or client device can include wireless circuitry as part of wireless interfaces, such as wireless interface 1012, wireless interface 1062, and wireless interface 1064, that can communicate over several different types of wireless networks depending on the range required for the communication. For example, a short-range wireless transceiver (e.g., Bluetooth), a medium-range wireless transceiver (e.g., WiFi), and/or a long range wireless transceiver (e.g., GSM/GPRS, UMTS, CDMA2000 1x/EV-DO and LTE/LTE-Advanced) can be used depending on the type of communication or the range of the communication.

Connection 1038 in particular may, in certain embodiments, be implemented as a peer to peer (P2P) wireless connection directly between wireless interface 1012 and wireless interface 1062. In other embodiments, connection 1038 may include multiple additional devices and sub-connections, including multiple access points, network routing connections, and communication servers.

Wireless circuitry may be used in conjunction with wireless interfaces such as wireless interfaces 1012, 1062, and 1064 to send and receive information over wireless connections such as connection. Any device described herein may additionally include conventional circuitry such as an antenna system, an RF transceiver, one or more amplifiers, a tuner, one or more oscillators, a digital signal processor, a CODEC chipset, memory, etc. to enable various wireless connections as described herein.

Wireless circuitry may be coupled to processors such as processor 1002 and processor 1052 via peripherals interfaces. Voice and data information received by wireless circuitry may be sent to one or more processors via peripheral interfaces. One or more processors such as processors 1002 and 1052 may be configurable to process various data formats for one or more application programs stored on the memory of a device. As shown in FIG. 10, processor 1052 may be an application processor for proxy device 1050. Proxy device may also include communication circuits 1053 and 1055. In some embodiments, communication circuit 1053 is a BT/WiFi circuit with a proxy router, and communication circuit 1055 is a cellular circuit. In the non-limiting example of FIG. 10, communication circuit 1053 may be a combination WiFi/BT circuit, and communication circuit 1055 may be a cellular circuit. According to this example, communication circuit 1053 may include one or more of a WiFi radio and a BT radio. Similarly, communication circuit 1055 may include a cellular radio.

Processors 1002 and 1052 may run various software components stored in respective memories 1004 and 1054 to perform various functions for devices 1000 and 1050. In some embodiments, the software components include an operating system, a communication module (or set of instructions), and other applications (or sets of instructions). In different embodiments, a processor may be a single integrated circuit, a set of multiple integrated circuits, or any logic hardware that may be used to implement processing functionality.

An operating system executed by a processor can be any suitable operating system. The operating system can include various procedures, sets of instructions, software components, and/or drivers for controlling and managing general system tasks (e.g., memory management, storage device control, power management, etc.) and facilitates communication between various hardware and software components.

Memory as described herein, including memory 1004 and memory 1054, may be any computer-readable medium and may further be any device or medium that can store code and/or data for use by one or more processors or device components. This may include a memory hierarchy, including cache, main memory, and secondary memory. The memory hierarchy can be implemented using any combination of RAM (e.g., SRAM, DRAM, SDRAM), ROM, FLASH, magnetic and/or optical storage devices, such as disk drives, magnetic tape, CDs (compact disks) and DVDs (digital video discs). In some embodiments, peripherals interfaces, one or more processors, and a memory controller can be implemented on a single chip within any device described herein. In some other embodiments, they can be implemented on separate chips.

Any device described herein such as host device 1050 and client device 1000 may also include power systems for powering the various hardware components. Power systems can include a power management system, one or more power sources (e.g., battery, alternating current (AC)), a recharging system, a power failure detection circuit, a power converter or inverter, a power status indicator (e.g., a light emitting diode (LED)) and any other components typically associated with the generation, management and distribution of power in mobile devices.

In some embodiments, host devices and/or client devices may include various sensors. A camera may be one example of a sensor. Such camera devices along with other sensors may be considered input devices as part of input device 1056. A camera may be used to create AV data for video calls or for pictures that may be communicated via data sharing provided by a host device. In some embodiments, devices may also include various other sensors. Sensors can include accelerometers, compass, gyrometer, pressure sensors, audio sensors, light sensors, barometers, microphones, and the like. Sensors can be used to implement various device decision making and filtering, such as blur compensation for a video image in a video call, or audio filtering to assist in filtering background noise from audio information captured at one or more microphones.

In some embodiments, a client device 1000 or a host device 1050 can include a Global Positioning System (GPS) receiver or other location assistance devices or modules. A device can use a satellite navigation system, such as the GPS, to obtain position information, timing information, altitude, or other navigation information. During operation, the GPS unit can receive signals from GPS satellites orbiting the Earth. The GPS unit analyzes the signals to make a transit time and distance estimation. The GPS unit can determine the current position (current location) of the mobile device. Based on these estimations, the mobile device can determine a location fix, altitude, and/or current speed. A location fix can be geographical coordinates such as latitudinal and longitudinal information. Other non-GPS location/motion modules may assist in determining the current position (e.g., coordinates or other geographic location identifier) and motion of a client device 1000 or host device 1050. In addition to GPS, cellular network positioning based on "cell IDs," and WiFi positioning technology based on a WiFi networks may be used for location assistance. In some embodiments, location/motion modules may use sensor information with the above systems to determine the current position of the host device. The location information may then be used to manage data sharing connections not only for a current host device that is sharing data, but for other host devices that may be used for data sharing based on movement of client devices.

Processor 1002 and processor 1052 may execute one or more applications on their respective devices, including without limitation, a browser, address book, contact list, email, instant messaging, word processing, keyboard emulation, widgets, JAVA-enabied applications, encryption, digital rights management, voice recognition, voice replication, a music player (which plays back recorded music stored in one or more files, such as MP3 or AAC files), etc. The one or more applications can also include a specific application for managing data sharing communications.

There may be other modules or sets of instructions such as a graphics module, a time module, etc. For example, the graphics module can include various conventional software components for rendering, animating and displaying graphical objects (including without limitation text, web pages, icons, digital images, animations, and the like) on a display surface. In another example, a timer module can be a software timer. The timer module can also be implemented in hardware. The time module can maintain various timers for any number of events.

I/O subsystem including various input devices can be coupled to a display system such as display 1008 or display 1058. These displays may be touch-sensitive and may therefore operate as displays and input devices. A touch sensitive display of client device 1000 may thus operate both as input device 1006 and display 1008. A touch sensitive display of host 1050 may operate as display 1058 and input device 1056. The display may present visual output to the user as a graphic user interface (UI). The visual output can include text, graphics, video, and any combination thereof. Some or all of the visual output can correspond to user-interface objects. A display can use LED (light emitting diode), LCD (liquid crystal display) technology, or LPD (light emitting polymer display) technology, although other display technologies can be used in other embodiments.

In some embodiments, an I/O subsystem can include a display and user input devices such as a keyboard, mouse, and/or trackpad as part of input device(s) 1006 or input device(s) 1056. In some embodiments, I/O subsystem can include a touch-sensitive display. A touch-sensitive display can also accept input from the user based on haptic and/or tactile contact. In some embodiments, a touch-sensitive display forms a touch-sensitive surface that accepts user input. The touch-sensitive display/surface (along with any associated modules and/or sets of instructions) detects contact (and any movement or release of the contact) on the touch-sensitive display and converts the detected contact into interaction with user-interface objects, such as one or more soft keys, that are displayed on the touch screen when the contact occurs. In some embodiments, a point of contact between the touch-sensitive display and the user corresponds to one or more digits of the user. The user can make contact with the touch-sensitive display using any suitable object or appendage, such as a stylus, pen, finger, and so forth. A touch-sensitive display surface can detect contact and any movement or release thereof using any suitable touch sensitivity technologies, including capacitive, resistive, infrared, and surface acoustic wave technologies, as well as other proximity sensor arrays or other elements for determining one or more points of contact with the touch-sensitive display.

Further, the input devices of a particular client device or host device can be coupled to one or more other physical control devices (not shown), such as pushbuttons, keys, switches, rocker buttons, dials, slider switches, sticks, LEDs, etc., for controlling or performing various functions, such as power control, speaker volume control, ring tone loudness, keyboard input, scrolling, hold, menu, screen lock, clearing and ending communications and the like. In some embodiments, in addition to the touch screen, devices may include a touchpad separate from the screen for activating or deactivating particular functions. In some embodiments, the touchpad is a touch-sensitive area of the device that, unlike the touch screen, does not display visual output. The touchpad can be a touch-sensitive surface that is separate from the touch-sensitive display or an extension of the touch-sensitive surface formed by the touch-sensitive display.

In some embodiments, some or all of the operations described herein can be performed using an application executing on the user's mobile device. Circuits, logic modules, processors, and/or other components may be configured to perform various operations described herein. Those skilled in the art will appreciate that, depending on implementation, such configuration can be accomplished through design, setup, interconnection, and/or programming of the particular components and that, again depending on implementation, a configured component might or might not be reconfigurable for a different operation. For example, a programmable processor can be configured by providing suitable executable code; a dedicated logic circuit can be configured by suitably connecting logic gates and other circuit elements; and so on.

Computer programs incorporating various features of the present disclosure may be encoded on various computer readable storage media; suitable media include magnetic disk or tape, optical storage media such as compact disk (CD) or DVD (digital versatile disk), flash memory, and the like. Computer readable storage media encoded with the program code may be packaged with a compatible device or provided separately from other devices. In addition program code may be encoded and transmitted via wired optical, and/or wireless networks conforming to a variety of protocols, including the Internet, thereby allowing distribution, e.g., via Internet download.

In addition to client devices such as client devices 1000 and host devices such as host device 1050 detailed above, aspects of networks such as network 1090 and network connections such as network connection 1038 may also be implemented using various devices and device components. For example, while in certain embodiments connection 1038 may simply be a P2P wireless connection directly between wireless interface 1012 and wireless interface 1062, in other embodiments, a communications network may be used to implement connection 1038. Such a connection may include one or more access points, routers, server computers, storage devices, or other devices to implement network connection 1038. Each of these devices may include a processor, memory, and input/output structure as detailed above. Similarly, other network connections may involve cell towers, switching networks, packet processing devices, in addition to the server computers and other network infrastructure detailed above, each of which may include processing, memory, and network interface components.

Client device 1000 may be any device accessible by a wireless interface, including a desktop computer, a laptop computer, a smartphone, a tablet computer, a wearable device (e.g., a network enabled watch, earpiece, or necklace) a networked appliance (e.g., a network enabled refrigerator or clothes washer,) media player, personal digital assistant, key fob, access card, multi-function device, game system, or any other such client device. Client device 1000 comprises memory 1004, processor 1002, input device 1006, display 1008, and wireless interface 1012. Client device 1000 may also be configured with one more software modules for execution of particular functions, algorithms, and/or methods including, but not limited to, advertisement module 1011. Proxy device 1050 includes processor 1052, wireless interface 1062, wireless interface 1064, and baseband device 1059. Proxy device 1050 may also include communication circuit 1053.

In the non-limiting example of FIG. 10, communication circuit 1053 may include WiFi/BT circuitry and cellular circuitry. In some embodiments, communication circuit 1053 may be a combination WiFi/BT circuit including a WiFi radio and a BT radio. Communication circuit 1053 may also include cellular circuitry and a cellular radio.

Proxy (host) device 1050 may be any communication device capable of providing a proxy connection to a client device 1000 in a fashion similar to what is described above for the routing of proxy connections between various client devices and a network such as network 1090. Certain embodiments of host devices may have multiple communications interfaces, such that as part of data sharing performed by a host device, the host device communicates with a network using one communication interface based on a first communication protocol, and the host device communicates with a client device using a second communication interface different from the first communication interface and based on a second communication protocol different from the first communication protocol. Examples of such host devices may include smart phones, desktop computers, laptop computers, and other such network enabled computing devices. For example, proxy device 1050 may communicate with network 1090 using one communication interface, wireless interface 1064, based on a first communication protocol supported by communication circuit 1053. Also, for example, proxy device 1050 may communicate with client device 1000 using a second communication interface, wireless interface 1062, different from the first communication interface and based on a second communication protocol different from the first communication protocol, where the second communication protocol is supported by communication circuit 1053.

Client device 1000 may communicate with host device 1050 via connection 1038. Similarly, host device 1050 may communicate with network 1090 via connection 1088. In further embodiments, client device 1000 may also create a connection with one or more other networks including network 1090. Connection 1038 in particular may, in certain embodiments, be implemented as a peer to peer (P2P) wireless connection directly between wireless interface 1012 and wireless interface 1062. In other embodiments, connection 1038 may include multiple additional devices and sub-connections, including multiple access points, network routing connections, and communication servers.

Processors 1002 and 1052 may run various software components to perform various functions for devices 1000 and 1050 such as, but not limited to, module 1011. For example, processor 1002 may run software components stored in memory 1004 to perform various functions for client device 1000. In some embodiments, the software components also include an operating system. In certain embodiments, processor 1052 may be an application processor. In some examples, the advertisement module 1011 may be configured to determine when to provide a connection advertisement as well as what to include in the advertisement.

As noted, the advertisement may include an indication of the type of connection requested by the client device 1000 as well as other information. As shown in FIG. 10, the proxy device 1050 may include a communication circuit 1053. Communication circuit 1053 may be configured to communicate data with network 1090. In some embodiments, a response from network 1090 may indicate the presence of available data queued for delivery to client device 1000. Further, the indication of available data may include the available data. The proxy device 1050 may be configured to determine whether there is available data for a client device 1000 (e.g., based on communications exchanged with network 1090 over network connection 1088).

The proxy device 1050 may receive a connection advertisement provided by the client device 1000 (e.g., via the connection 1038). The proxy device 1050 may then make a determination, after querying network 1090, that there is available data at network 1090 for client device 1000. Responsive to determining that there is available data, a connection (e.g., P2P connection 1038) may be established between proxy 1050 and client 1000. In some embodiments, the connection may be established after determining that there is available data at network 1090 and based on one or more factors associated with the potential connection between the client device 1000 and network 1090. For example, the proxy device 1050 may select wireless communication circuit to use for communicating data between the network 1090 and the client device 1000. The selection of a wireless communication circuit may be based on one or more policy preferences of the proxy device 1050, and/or one or more network connection properties of the proxy device 1050 with network 1090. The connection request sent to the client device 1000 may indicate the selected route (e.g., including the selected wireless communication circuit).

A network connection property may be any property or combination of properties desired for availability and/or quality of a network connection that a proxy device 1050 has. For example, a network connection property can indicate the presence of Internet connectivity and the quality of a connection that may be offered to a client device 1000. A network connection property may measure the ability of the proxy device 1050 with respect to factors associated with the proxy device 1050 (e.g., external network congestion, number of other devices connected to the proxy device 1050, data plan budget of the proxy device 1050, battery levels of the proxy device 1050, etc.) and/or factors such as LAN signal strength for a wireless LAN link between the proxy device 1050 and the client device 1000. A network connection property may reflect other properties as well, and it may be a percentage (e.g., 10%, 50%, etc.) or it may be a value out of another value (e.g., 100/100, or 1/5). More specifically, a network connection property may be a value calculated by combining values associated with several properties or factors including, but not limited to, a received signal strength indication of the connection advertisement, WAN network congestion and/or connection quality (e.g., whether the cellular connection is 2G, 3G, LTE, or the like), data usage budgets of the proxy device 1050, and/or battery budgets of the proxy device 1050. Each network connection property may be weighted, in some examples, such that relative importance for each property may be considered. For example, if the presence of a relatively strong WiFi connection between the proxy device 1050 and a WAN is the most important factor in determining a data route, the WiFi network connection property may be weighted the greatest.

In some aspects, the presence of available data at network 1090 may be determined by the proxy device 1050 after the proxy device 1050 receives the connection advertisement from the client device 1000. For example, proxy device 1050 may query network 1090 to determine if there is available data queued at network 1090 that is associated with a client ID included in the connection advertisement. In this way, an end-to-end network connection between network 1090 and client 1000 that includes network connection 1088 and P2P connection 1038 may be established via proxy device 1050 if there is available data at network 1090 for the client ID included in a received connection advertisement.

In addition to determining whether there is available data, other network connection properties, communication policy preferences, or values may also be utilized to determine whether an end-to-end network connection is to be established. For example, the proxy device 1050 may be configured to identify the RSSI of the connection advertisement. Such a value may indicate the strength of incoming, and potentially future, transmission between the proxy device 1050 and the client device 1000 through the LAN. Additionally, the quality, strength, and/or congestion of the WAN may be a factor in determining a network connection property. For example, if the WAN connection of the proxy device 1050 is poor, there would be little gained by routing a proxy connection via the proxy device 1050 to a client device 1000, even if the LAN connection between that client device 1000 and the proxy device 1050 were very strong. Other network connection properties may include data usage budgets of the proxy device 1050. Network connection properties may be used in conjunction with one or more communication policy preferences to determine that an end-to-end connection should be established to transfer available data. For example, a communication policy preference may indicate that a host device is not available to act as a proxy device when a battery level or capacity is below a certain threshold. More specifically, if the battery of the proxy device 1050 is low, the proxy device 1050 may seek to avoid serving as a proxy for transferring data between network 1090 and client device 1000 because, the proxy device 1050 will use more power if it is transferring data. Similarly, if a service provider or cellular carrier that provides WAN data to the proxy device 1050 limits the amount of the data that the proxy device 1050 can receive, and/or if the user only pays for a certain amount of data outside of the provider's network (e.g., when the proxy device 1050 is roaming), data usage budgets may come into play when establishing a connection via proxy device 1050. For example, if there is very little data available for download by the proxy device 1050 (e.g., based on limits, budgets, a roaming status, or the like), this proxy device 1050 may not provide a proxy connection based on a criteria or preference tied to such limits, budgets, or roaming status.

FIG. 11 is an example block diagram showing a device that may be a host device, a client device, or a server. Mobile device 1100 generally includes computer-readable medium 1102, a processing system 1104, an Input/Output (I/O) subsystem 1106, wireless circuitry 1108, and audio circuitry 1110 including speaker 1150 and microphone 1152. These components may be coupled by one or more communication buses or signal lines 1103. Device 1100 can be any portable electronic device, including a handheld computer, a tablet computer, a mobile phone, laptop computer, tablet device, media player, personal digital assistant (PDA), a key fob, a car key, an access card, a multi-function device, a mobile phone, a portable gaming device, or the like, including a combination of two or more of these items. In various embodiments, first device 600 or second device 650 or any other device, server, access point, network element or other computing device or element may be implemented in whole or in part using the elements of FIG. 11.

It should be apparent that the architecture shown in FIG. 11 is only one example of an architecture for mobile device 1100, and that device 1100 can have more or fewer components than shown, or a different configuration of components. The various components shown in FIG. 11 can be implemented in hardware, software, or a combination of both hardware and software, including one or more signal processing and/or application specific integrated circuits.

Wireless circuitry 1108 is used to send and receive information over a wireless link or network to one or more other devices' conventional circuitry such as an antenna system, an RF transceiver, one or more amplifiers, a tuner, one or more oscillators, a digital signal processor, a CODEC chipset, memory, etc. In some embodiments, wireless circuitry 1108 is capable of establishing and maintaining communications with other devices using one or more communication protocols. A mobile device can include wireless circuitry that can communicate over several different types of wireless networks depending on the range required for the communication.

Wireless circuitry 1108 is coupled to processing system 1104 via peripherals interface 1116. Interface 1116 can include conventional components for establishing and maintaining communication between peripherals and processing system 1104. Voice and data information received by wireless circuitry 1108 (e.g., in speech recognition or voice command applications) is sent to one or more processors 1118 via peripherals interface 1116. One or more processors 1118 are configurable to process various data formats for one or more application programs 1134 stored on medium 1102.

Peripherals interface 1116 couple the input and output peripherals of the device to processor 1118 and computer-readable medium 1102. One or more processors 1118 communicate with computer-readable medium 1102 via a controller 1120. Computer-readable medium 1102 can be any device or medium that can store code and/or data for use by one or more processors 1118. Medium 1102 can include a memory hierarchy, including cache, main memory, and secondary memory. The memory hierarchy can be implemented using any combination of RAM (e.g., SRAM, DRAM, SDRAM), ROM, FLASH, magnetic and/or optical storage devices, such as disk drives, magnetic tape, CDs (compact disks) and DVDs (digital video discs). In some embodiments, peripherals interface 1116, one or more processors 1118, and memory controller 1120 can be implemented on a single chip, such as processing system 1104. In some other embodiments, they can be implemented on separate chips.

Mobile device 1100 also includes a power system 1142 for powering the various hardware components. Power system 1142 can include a power management system, one or more power sources (e.g., battery, alternating current (AC)), a recharging system, a power failure detection circuit, a power converter or inverter, a power status indicator (e.g., a light emitting diode (LED)) and any other components typically associated with the generation, management and distribution of power in mobile devices.

In some embodiments, mobile device 1100 includes a camera 1144. In some embodiments, mobile device 1100 includes sensors 1146. Sensors can include accelerometers, compasses, gyrometers, pressure sensors, audio sensors, light sensors, barometers, and the like. Sensors 1146 can be used to sense location aspects, such as auditory or light signatures of a location.

In some embodiments, mobile device 1100 can include a Global Positioning System (GPS) receiver, sometimes referred to as a GPS unit 1148. A mobile device can use a satellite navigation system, such as the GPS, to obtain position information, timing information, altitude, or other navigation information. During operation, the GPS unit can receive signals from GPS satellites orbiting the Earth. The GPS unit analyzes the signals to make a transit time and distance estimation. The GPS unit can determine the current position (current location) of the mobile device. Based on these estimations, the mobile device can determine a location fix, altitude, and/or current speed. A location fix can be geographical coordinates such as latitudinal and longitudinal information.

One or more processors 1118 run various software components stored in medium 1102 to perform various functions for device 1100. In some embodiments, the software components include an operating system 1122, a communication module (or set of instructions) 1124, a location/motion module (or set of instructions) 1126, and other applications (or set of instructions) 1134, such as a car locator app and a navigation app. In some examples, the other applications 1134 may include applications that enable the functionality described above, namely establishing proxy connections via proxy device 1050 using communication circuits 1053 and 1055, and/or wireless interfaces 1062 and 1064 of FIG. 10.

Operating system 1122 can be any suitable operating system, including iOS, Mac OS, Darwin, RTXC, LINUX, UNIX, OS X, WINDOWS, or an embedded operating system such as VxWorks. The operating system can include various procedures, sets of instructions, software components, and/or drivers for controlling and managing general system tasks (e.g., memory management, storage device control, power management, etc.) and facilitates communication between various hardware and software components.

Communication module 1124 facilitates communication with other devices over one or more external ports 1136 or via wireless circuitry 1108 and includes various software components for handling data received from wireless circuitry 1108 and/or external port 1136. External port 1136 (e.g., USB, FireWire, Lightning connector, 60-pin connector, etc.) is adapted for coupling directly to other devices or indirectly over a network (e.g., the Internet, wireless LAN, etc.).

Location/motion module 1126 can assist in determining the current position (e.g., coordinates or other geographic location identifier) and motion (e.g., speed and bearing information) of mobile device 1100. Modern positioning systems include satellite based positioning systems, such as GPS, cellular network positioning based on "cell IDs," and WiFi positioning technology based on a WiFi networks. Typically, GPS is the most accurate, but often consumes more power than the other positioning systems. GPS also relies on the visibility of multiple satellites to determine a position estimate, which may not be visible (or have weak signals) indoors or in "urban canyons." In some embodiments, location/motion module 1126 receives data from GPS unit 1148 and analyzes the signals to determine the current position, speed, and/or bearing of the mobile device. In some embodiments, location/motion module 1126 can determine a current location, speed, and/or bearing using WiFi or cellular location technology. For example, the location, speed, and/or bearing of the mobile device can be estimated using knowledge of nearby cell sites and/or WiFi access points with knowledge also of their locations. Information identifying the WiFi or cellular transmitter is received at wireless circuitry 1108 and is passed to location/motion module 1126. In some embodiments, the location module receives the one or more transmitter IDs. In some embodiments, a sequence of transmitter IDs can be compared with a reference database (e.g., Cell ID database, WiFi reference database) that maps or correlates the transmitter IDs to position coordinates of corresponding transmitters, and computes estimated position coordinates for mobile device 1100 based at least in part on the position coordinates of the corresponding transmitters. Regardless of the specific location technology used, location/motion module 1126 receives information from which a location fix can be derived, interprets that information, and returns location information, such as geographic coordinates, latitude/longitude, or other location fix data.

The one or more applications 1134 on the mobile device can include any applications installed on the device 1100, including without limitation, a browser, address book, contact list, email, instant messaging, word processing, keyboard emulation, data routing, proxy connection managers, widgets, JAVA-enabled applications, encryption, digital rights management, voice recognition, voice replication, a music player (which plays back recorded music stored in one or more files, such as MP3 or AAC files), etc.

There may be other modules or sets of instructions (not shown), such as a graphics module, a time module, etc. For example, the graphics module can include various conventional software components for rendering, animating and displaying graphical objects (including without limitation text, web pages, icons, digital images, animations, and the like) on a display surface. In another example, a timer module can be a software timer. The timer module can also be implemented in hardware. The time module can maintain various timers for any number of events.

The I/O subsystem 1106 can be coupled to a display system (not shown), which can be a touch-sensitive display. The display displays visual output to the user in a GUI. The visual output can include text, graphics, video, and any combination thereof. Some or all of the visual output can correspond to user-interface objects. A display can use LED (light emitting diode), LCD (liquid crystal display) technology, or LPD (light emitting polymer display) technology, although other display technologies can be used in other embodiments.

In some embodiments, I/O subsystem 1106 can include a display and user input devices such as a keyboard, mouse, and/or trackpad. In some embodiments, I/O subsystem 1106 can include a touch-sensitive display. A touch-sensitive display can also accept input from the user based on haptic and/or tactile contact. In some embodiments, a touch-sensitive display forms a touch-sensitive surface that accepts user input. The touch-sensitive display/surface (along with any associated modules and/or sets of instructions in medium 1102) detects contact (and any movement or release of the contact) on the touch-sensitive display and converts the detected contact into interaction with user-interface objects, such as one or more soft keys, that are displayed on the touch screen when the contact occurs. In some embodiments, a point of contact between the touch-sensitive display and the user corresponds to one or more digits of the user. The user can make contact with the touch-sensitive display using any suitable object or appendage, such as a stylus, pen, finger, and so forth. A touch-sensitive display surface can detect contact and any movement or release thereof using any suitable touch sensitivity technologies, including capacitive, resistive, infrared, and surface acoustic wave technologies, as well as other proximity sensor arrays or other elements for determining one or more points of contact with the touch-sensitive display.

Further, the I/O subsystem can be coupled to one or more other physical control devices (not shown), such as pushbuttons, keys, switches, rocker buttons, dials, slider switches, sticks, LEDs, etc., for controlling or performing various functions, such as power control, speaker volume control, ring tone loudness, keyboard input, scrolling, hold, menu, screen lock, clearing and ending communications and the like. In some embodiments, in addition to the touch screen, device 1100 can include a touchpad (not shown) for activating or deactivating particular functions. In some embodiments, the touchpad is a touch-sensitive area of the device that, unlike the touch screen, does not display visual output. The touchpad can be a touch-sensitive surface that is separate from the touch-sensitive display or an extension of the touch-sensitive surface formed by the touch-sensitive display.

In some embodiments, some or all of the operations described herein can be performed using an application executing on the user's mobile device. Circuits, logic modules, processors, and/or other components may be configured to perform various operations described herein. Those skilled in the art will appreciate that, depending on implementation, such configuration can be accomplished through design, setup, interconnection, and/or programming of the particular components and that, again depending on implementation, a configured component might or might not be reconfigurable for a different operation. For example, a programmable processor can be configured by providing suitable executable code; a dedicated logic circuit can be configured by suitably connecting logic gates and other circuit elements; and so on.

Computer programs incorporating various features of the present disclosure may be encoded on various computer readable storage media; suitable media include magnetic disk or tape, optical storage media such as compact disk (CD) or DVD (digital versatile disk), flash memory, and the like. Computer readable storage media encoded with the program code may be packaged with a compatible device or provided separately from other devices. In addition program code may be encoded and transmitted via wired optical, and/or wireless networks conforming to a variety of protocols, including the Internet, thereby allowing distribution, e.g., via Internet download.

Such programs may also be encoded and transmitted using carrier signals adapted for transmission via wired, optical, and/or wireless networks conforming to a variety of protocols, including the Internet. As such, a computer readable medium according to an embodiment of the present disclosure may be created using a data signal encoded with such programs. Computer readable media encoded with the program code may be packaged with a compatible device or provided separately from other devices (e.g., via Internet download). Any such computer readable medium may reside on or within a single computer product (e.g. a hard drive, a CD, or an entire computer system), and may be present on or within different computer products within a system or network. A computer system may include a monitor, printer, or other suitable display for providing any of the results mentioned herein to a user.

Any of the methods described herein may be totally or partially performed with a computer system including one or more processors, which can be configured to perform the steps. Thus, embodiments can be directed to computer systems configured to perform the steps of any of the methods described herein, potentially with different components performing a respective steps or a respective group of steps. Although presented as numbered steps, steps of methods herein can be performed at a same time or in a different order. Additionally, portions of these steps may be used with portions of other steps from other methods. Also, all or portions of a step may be optional. Additionally, any of the steps of any of the methods can be performed with modules, circuits, or other means for performing these steps.

Although the disclosure has been described with respect to specific embodiments, it will be appreciated that the disclosure is intended to cover all modifications and equivalents within the scope of the following claims.

## Claims

1. A method (500) of using a host device to communicate with a client device, the method comprising:
at the host device (120, 304, 404, 704, 900, 1050) comprising at least one wireless interface for communications, a memory, and a processor coupled to the memory and to the at least one wireless interface:
receiving (502), via the at least one wireless interface, an advertisement message (306, 706) from the client device, the advertisement message (306, 706) including an identifier associated with the client device (130, 230, 302, 402, 702, 800, 1000) and a request for communication of data from a cloud-based service (303, 403, 703);
responsive to the received advertisement message (306,706), sending (504, 407) from the host device to the cloud-based service the identifier associated with the client device, wherein sending the identifier to the cloud-based service requests the cloud-based service to determine whether data associated with the client device is available at the cloud-based service;
responsive (308) to sending the identifier to the cloud-based service, receiving (506, 408) from the cloud-based service, a proxy indication of available data associated with the client device;
responsive (508) to the received proxy indication, providing, via the at least one wireless interface, a connection request from the host device to the client device, the connection request including a client indication of the available data from the cloud-based service, wherein providing the connection request from the host device to the client device initiates establishing a connection between the host device and the client device;
receiving (412) the available data from the cloud-based service; and
sending (510, 413) the available data to the client device utilizing the connection between the host device and the client device established in response to the received proxy indication (120).

2. The method of claim 1, wherein the identifier associated with the client device is a unique device identifier.

3. The method of claim 1, wherein the connection request includes the available data.

4. The method of claim 1, further comprising, at the host device:
receiving a response to the connection request; and
after receiving the response to the connection request, sending the available data to the client device.

5. The method of claim 1, wherein the client indication of the available data includes one or more properties of the available data, the method further comprising, at the host device:
receiving a response to the connection request wherein the response is sent responsive to determining that a property of the available data corresponds to a property of data desired by the client device; and
after receiving the response to the connection request, sending the available data to the client device.

6. The method of claim 5, wherein one of the one or more properties of the available data indicates a priority of the available data, and wherein the connection request is sent responsive to determining that the priority exceeds a threshold.

7. The method of claim 1, wherein the proxy indication of available data is received via the receiving of the available data.

8. The method of claim 1, wherein the host device is associated with a first user and wherein the client device is associated with a second user different from the first user.

9. The method of claim 1, wherein the at least one wireless interface comprises a first wireless interface and a second wireless interface, wherein the second wireless interface comprises at least one of a Bluetooth radio and a WiFi radio for communications between the host device and the client device, and wherein the first wireless interface comprises a cellular radio for communications between the host device and the cloud-based service.

10. The method of claim 1, wherein the connection request is sent responsive to:
receiving the proxy indication of available data; and
receiving a second advertisement message from the client device.

11. The method of claim 1, wherein the advertisement message further includes an indication of a requested connection type, and wherein sending the identifier to the cloud-based service comprises sending the identifier to the cloud-based service responsive to determining that the indication of the requested connection type indicates a downlink connection.

12. The method of claim 11, wherein providing the connection request comprises providing the connection request to the client device without sending the identifier to the cloud-based service responsive to determining that the indication of the requested connection type indicates an uplink connection.

13. The method of claim 1, wherein sending the identifier associated with the client device to the cloud-based service includes querying a database associated with the cloud-based service with the identifier, wherein the database includes the available data associated with the client device stored in association with the identifier.

14. A computer program comprising code executable by one or more processors of a computer system to perform the method of any of claims 1-13.

15. A system comprising:
one or more processors; and
one or more computer-readable storage mediums containing instructions configured to cause the one or more processors to perform the method of any of claims 1-13.

## Patentansprüche

1. Verfahren (500) des Verwendens einer Hostvorrichtung zum Kommunizieren mit einer Clientvorrichtung, das Verfahren umfassend:
an der Hostvorrichtung (120, 304, 404, 704, 900, 1050) umfassend mindestens eine drahtlose Schnittstelle für Kommunikationen, einen Speicher, und einen Prozessor der mit dem Speicher und mit der mindestens einen drahtlosen Schnittstelle gekoppelt ist:
Empfangen (502), mittels der mindestens einen drahtlosen Schnittstelle, einer Werbungsnachricht (306, 706) von der Clientvorrichtung, wobei die Werbungsnachricht (306, 706) eine Kennung, die mit der Clientvorrichtung (130, 230, 302, 402, 702, 800, 1000) assoziiert ist, und eine Anfrage für Kommunikation von Daten von einem cloudbasierten Dienst (303, 403, 703) beinhaltet;
als Reaktion auf die empfangene Werbungsnachricht (306, 706), Senden (504, 407) von der Hostvorrichtung an den cloudbasierten Dienst der Kennung, die mit der Clientvorrichtung assoziiert ist, wobei Senden der Kennung an den cloudbasierten Dienst den cloudbasierten Dienst anfragt, zu Bestimmen, ob Daten, die mit der Clientvorrichtung assoziiert sind, für den cloudbasierten Dienst verfügbar sind;
als Reaktion (308) auf Senden der Kennung an den cloudbasierten Dienst, Empfangen (506, 408) von dem cloudbasierten Dienst einer Proxyanzeige für verfügbare Daten, die mit der Clientvorrichtung assoziiert sind;
als Reaktion (508) auf die empfangene Proxyanzeige, Bereitstellen, mittels der mindestens einen drahtlosen Schnittstelle, einer Verbindungsanfrage von der Hostvorrichtung an die Clientvorrichtung, wobei die Verbindungsanfrage eine Clientanzeige der verfügbaren Daten von dem cloudbasierten Dienst beinhaltet, wobei Bereitstellen der Verbindungsanfrage von der Hostvorrichtung an die Clientvorrichtung Einrichten einer Verbindung zwischen der Hostvorrichtung und der Clientvorrichtung initiiert;
Empfangen (412) der verfügbaren Daten von dem cloudbasierten Dienst; und
Senden (510, 413) der verfügbaren Daten an die Clientvorrichtung, die die Verbindung zwischen der Hostvorrichtung und der Clientvorrichtung verwendet, die als Reaktion auf die empfangene Proxyanzeige eingerichtet wird.

2. Verfahren nach Anspruch 1, wobei die Kennung, die mit der Clientvorrichtung assoziiert ist, eine einzigartige Vorrichtungskennung ist.

3. Verfahren nach Anspruch 1, wobei die Verbindungsanfrage die verfügbaren Daten beinhaltet.

4. Verfahren nach Anspruch 1, ferner umfassend, an der Hostvorrichtung:
Empfangen einer Antwort auf die Verbindungsanfrage; und
nach Empfangen der Antwort auf die Verbindungsanfrage, Senden der verfügbaren Daten an die Clientvorrichtung.

5. Verfahren nach Anspruch 1, wobei die Clientanzeige der verfügbaren Daten eine oder mehrere Eigenschaften der verfügbaren Daten beinhaltet, das Verfahren ferner umfassend, an der Hostvorrichtung:
Empfangen einer Antwort auf die Verbindungsanfrage, wobei die Antwort als Reaktion auf Bestimmen gesendet wird, dass eine Eigenschaft der verfügbaren Daten einer Eigenschaft von Daten entspricht, die von der Clientvorrichtung erwünscht ist; und
nach Empfangen der Antwort auf die Verbindungsanfrage, Senden der verfügbaren Daten an die Clientvorrichtung.

6. Verfahren nach Anspruch 5, wobei eine der einen oder mehreren Eigenschaften der verfügbaren Daten eine Priorität der verfügbaren Daten anzeigt, und wobei die Verbindungsanfrage als Reaktion auf Bestimmen gesendet wird, dass die Priorität einen Schwellenwert übersteigt.

7. Verfahren nach Anspruch 1, wobei die Proxyanzeige von verfügbaren Daten empfangen wird mittels dem Empfangen der verfügbaren Daten.

8. Verfahren nach Anspruch 1, wobei die Hostvorrichtung mit einem ersten Benutzer assoziiert ist und wobei die Clientvorrichtung mit einem zweiten Benutzer assoziiert ist, der von dem ersten Benutzer verschieden ist.

9. Verfahren nach Anspruch 1, wobei die mindestens eine drahtlose Schnittstelle eine erste drahtlose Schnittstelle und eine zweite drahtlose Schnittstelle umfasst, wobei die zweite drahtlose Schnittstelle mindestens eines von einem Bluetooth-Radio und einem WiFi-Radio für Kommunikationen zwischen der Hostvorrichtung und der Clientvorrichtung umfasst, und wobei die erste Schnittstelle ein zelluläres Radio für Kommunikationen zwischen der Hostvorrichtung und dem cloudbasierten Dienst umfasst.

10. Verfahren nach Anspruch 1, wobei die Verbindungsanfrage gesendet wird als Reaktion auf:
Empfangen der Proxyanzeige von verfügbaren Daten; und
Empfangen einer zweiten Werbungsnachricht von der Clientvorrichtung.

11. Verfahren nach Anspruch 1, wobei die Werbungsnachricht ferner eine Anzeige eines angefragten Verbindungstyps beinhaltet, und wobei Senden der Kennung an den cloudbasierten Dienst Senden der Kennung an den cloudbasierten Dienst als Reaktion auf Bestimmen umfasst, dass die Anzeige des angefragten Verbindungstyps eine Downlinkverbindung anzeigt.

12. Verfahren nach Anspruch 11, wobei Bereitstellen der Verbindungsanfrage Bereitstellen der Verbindungsanfrage an die Clientvorrichtung ohne Senden der Kennung an den cloudbasierten Dienst als Reaktion auf Bestimmen umfasst, dass die Anzeige des angefragten Verbindungstyps eine Uplinkverbindung anzeigt.

13. Verfahren nach Anspruch 1, wobei Senden der Kennung, die mit der Clientvorrichtung assoziiert ist, an den cloudbasierten Dienst, Abfragen einer Datenbank beinhaltet, die mit dem cloudbasierten Dienst mit der Kennung assoziiert ist, wobei die Datenbank die verfügbaren Daten beinhaltet, die mit der Clientvorrichtung, die in Assoziation mit der Kennung gespeichert ist, assoziiert sind.

14. Computerprogramm umfassend Code, der durch einen oder mehrere Prozessoren eines Computersystems zum Durchführen des Verfahren nach einem der Ansprüche 1 - 13 ausführbar ist.

15. System umfassend:
einen oder mehrere Prozessoren; und
ein oder mehrere computerlesbare Speichermedien beinhaltend Anweisungen, die konfiguriert sind, um den einen oder die mehreren Prozessoren zu veranlassen, das Verfahren nach einem der Ansprüche 1 - 13 durchzuführen.

## Revendications

1. Un procédé (500) d'utilisation d'un dispositif hôte pour communiquer avec un dispositif client, le procédé comprenant :
au niveau du dispositif hôte (120, 304, 404, 704, 900, 1050) comprenant au moins une interface sans fil pour des communications, une mémoire et un processeur couplé à la mémoire et à l'au moins une interface sans fil :
la réception (502), via l'au moins une interface sans fil, d'un message d'annonce (306, 706) provenant du dispositif client, le message d'annonce (306, 706) incluant un identifiant associé au dispositif client (130, 230, 302, 402, 702, 800, 1000) et une requête pour une communication de données provenant d'un service basé sur le cloud (303, 403, 703) ;
en réponse au message d'annonce reçu (306, 706), l'envoi (504, 407) à partir du dispositif hôte au service basé sur le cloud, de l'identifiant associé au dispositif client, dans lequel l'envoi de l'identifiant au service basé sur le cloud fait la requête au service basé sur le cloud de déterminer si des données associées au dispositif client sont disponibles au niveau du service basé sur le cloud ;
en réponse (308) à l'envoi de l'identifiant au service basé sur le cloud, la réception (506, 408), en provenance du service basé sur le cloud, d'une indication de proxy pour des données disponibles associées au dispositif client ;
en réponse (508) à l'indication de proxy reçue, la délivrance, via l'au moins une interface sans fil, d'une requête de connexion en provenance du dispositif hôte au dispositif client, la requête de connexion incluant une indication client des données disponibles provenant du service basé sur le cloud, dans lequel la délivrance de la requête de connexion provenant du dispositif hôte au dispositif client lance l'établissement d'une connexion entre le dispositif hôte et le dispositif client ;
la réception (412) des données disponibles provenant du service basé sur le cloud ; et
l'envoi (510, 413) des données disponibles au dispositif client en utilisant la connexion entre le dispositif hôte et le dispositif client établie en réponse à l'indication de proxy reçue (120).

2. Le procédé selon la revendication 1, dans lequel l'identifiant associé au dispositif client est un identifiant unique de dispositif.

3. Le procédé selon la revendication 1, dans lequel la requête de connexion inclut les données disponibles.

4. Le procédé selon la revendication 1, comprenant en outre, au niveau du dispositif hôte :
la réception d'une réponse à la requête de connexion ; et
après la réception de la réponse à la requête de connexion, l'envoi des données disponibles au dispositif client.

5. Le procédé selon la revendication 1, dans lequel l'indication client des données disponibles inclut une ou plusieurs propriétés des données disponibles, le procédé comprenant en outre, au niveau du dispositif hôte :
la réception d'une réponse à la requête de connexion, dans lequel la réponse est envoyée en réponse à une détermination qu'une propriété des données disponibles correspond à une propriété de données désirées par le dispositif client ; et
après la réception de la réponse à la requête de connexion, l'envoi des données disponibles au dispositif client.

6. Le procédé selon la revendication 5, dans lequel l'une des une ou plusieurs propriétés des données disponibles indique une priorité des données disponibles, et dans lequel la requête de connexion est envoyée en réponse à une détermination que la priorité excède un seuil.

7. Le procédé selon la revendication 1, dans lequel l'indication de proxy de données disponibles est reçue via la réception des données disponibles.

8. Le procédé selon la revendication 1, dans lequel le dispositif hôte est associé à un premier utilisateur et dans lequel le dispositif client est associé à un second utilisateur différent du premier utilisateur.

9. Le procédé selon la revendication 1, dans lequel l'au moins une interface sans fil comprend une première interface sans fil et une seconde interface sans fil, dans lequel la seconde interface sans fil comprend au moins une parmi une radio Bluetooth et une radio WiFi pour des communications entre le dispositif hôte et le dispositif client, et dans lequel la première interface sans fil comprend une radio cellulaire pour des communications entre le dispositif hôte et le service basé sur le cloud.

10. Le procédé selon la revendication 1, dans lequel la requête de connexion est envoyée en réponse à :
la réception de l'indication de proxy de données disponibles ; et
la réception d'un second message d'annonce provenant du dispositif client.

11. Le procédé selon la revendication 1, dans lequel le message d'annonce inclut en outre une indication d'un type de connexion objet d'une requête, et dans lequel l'envoi de l'identifiant au service basé sur le cloud comprend l'envoi de l'identifiant au service basé sur le cloud en réponse à une détermination que l'indication du type de connexion objet d'une requête indique une connexion de liaison descendante.

12. Le procédé selon la revendication 11, dans lequel la délivrance de la requête de connexion comprend la délivrance de la requête de connexion au dispositif client sans envoyer l'identifiant au service basé sur le cloud en réponse à une détermination que l'indication du type de connexion objet d'une requête indique une connexion de liaison montante.

13. Le procédé selon la revendication 1, dans lequel l'envoi de l'identifiant associé au dispositif client au service basé sur le cloud inclut l'interrogation d'une base de données associée au service basé sur le cloud avec l'identifiant, dans lequel la base de données inclut les données disponibles associées au dispositif client stockées en association avec l'identifiant.

14. Un programme d'ordinateur comprenant un code exécutable par un ou plusieurs processeurs d'un système d'ordinateur pour mettre en œuvre le procédé selon l'une des revendications 1 à 13.

15. Un système comprenant :
un ou plusieurs processeurs ; et
un ou plusieurs supports de stockage lisibles par ordinateur contenant des instructions configurées pour amener les un ou plusieurs processeurs à mettre en œuvre le procédé selon l'une des revendications 1 à 13.
